# EUROPEAN PATENT SPECIFICATION

(11) **EP 3 921 383 B1**
(45) Date of publication and mention of the grant of the patent: **11.01.2023**
(21) Application number: 20705503.9
(22) Date of filing: 10.02.2020
(51) Int. Cl.: C09K 5/14, F28D 20/02

(54) **PHASE CHANGE MATERIALS (PCMS) WITH SOLID TO SOLID TRANSITIONS**
PHASENWECHSELMATERIALIEN (PCM) MIT FEST-ZU-FEST-ÜBERGÄNGEN
MATÉRIAUX À CHANGEMENT DE PHASE (PCM) À TRANSITIONS SOLIDE À SOLIDE

(30) Priority: 08.02.2019 GB 201901761
(43) Date of publication of application: 15.12.2021
(73) Proprietor: Sunamp Limited, Macmerry East Lothian EH33 1RY (GB)
(72) Inventor: BISSELL, Andrew John, Edinburgh EH33 1RY (GB); OLIVER, David, Edinburgh EH33 1RY (GB); PULHAM, Colin Richard, Edinburgh EH33 1RY (GB); CLARK, Rowan, Edinburgh EH33 1RY (GB); LOGAN, Hannah, Edinburgh EH33 1RY (GB)
(74) Representative: HGF
(86) International application number: PCT/GB2020/050299
(87) International publication number: WO 2020/161507

(56) References cited:
- US-A1- 2002 172 634
- US-A1- 2018 265 364
- US-A1- 2018 320 987
- PETROV G S ET AL: "Determination of heat capacity and enthalpies of phase transitions of ammonium, sodium and potassium tetrafluoroborates", THERMOCHIMICA ACTA, ELSEVIER SCIENCE PUBLISHERS, AMSTERDAM, NL, vol. 87, 15 May 1985 (1985-05-15), pages 381-383, XP026568610, ISSN: 0040-6031, DOI: 10.1016/0040-6031(85)85362-4 [retrieved on 1985-05-15]

## Description

### Field of the Invention

The present invention relates to phase change materials (PCMs) comprising at least one or a plurality (e.g. a mixture) of tetrafluoroborate salts that are capable of undergoing a solid to solid phase transition. In particular, the present invention relates to phase change materials (PCMs) comprising at least one or a plurality (e.g. a mixture) of tetrafluoroborate salts where there is at least one tetrafluoroborate salt or a plurality of tetrafluoroborate salt which have a solid to solid phase transition. The tetrafluoroborate salt may comprise at least one anion or a plurality of the same or different anions of tetrafluoroborate (e.g. BF₄⁻). The PCM may have a solid to solid phase change in the region of about -270°C to about 3,000°C, about -50°C to about 1,500°C, about 0°C to about 1,000°C, or about 0°C to about 500°C temperature range.

### Background of the Invention

Phase change materials (PCMs) are materials which have a high latent heat associated with a phase transition and have potential for use in energy storage applications, amongst others.

PCMs with solid to solid phase transitions are of a particular interest due to desirable properties such as low-volume change during transition, easier encapsulation and higher safety at high temperatures than solid to liquid phase transition PCMs.

### (a) Phase Change Materials

Phase change materials (PCMs) have a high latent heat therefore large amounts of energy can be stored and released during phase change transitions. During a phase change, the system remains at a constant temperature, hence heat of a specific temperature can be stored or released for an above ambient temperature PCM. Energy is released during a cooling transition and stored during a heating transition.

Phase change materials are categorised as, solid to liquid, liquid to gas and solid to solid phase transitions. However, liquid to gas transitions are not commonly used in Thermal Energy Stores (TES) due to large volume changes.

The physical properties of PCMs can be altered with the addition of nucleators, which can reduce super-cooling (cooling below transition temperature with no phase change) or nucleate a preferred phase. A PCMs transition temperature can also be altered with the addition of new salts, sometimes known as eutectics, like the addition of a salt to water, an existing salt or a solution, results in the depression of the systems transition temperature. A eutectic is the composition of the system where all components transition simultaneously at a single transition temperature.

### (b) Solid to Liquid Phase Change Materials

The most common form of phase change materials have liquid to solid transitions. Energy is released during freezing and absorbed during melting. During freezing nucleation hopefully occurs spontaneously, initiating crystallisation of the solid phase.

Due to the existence of a liquid phase, the material must be encapsulated to avoid loss of material and ensure safety in applications. Furthermore, as the phase change from a solid to liquid results in a change in density of the materials, this must be accounted for in the encapsulation of these materials.

### (c) Solid to Solid Phase Change Materials

Often no visible change is observed during a solid to solid phase transition and low volume change is observed. This is beneficial in their application as PCMs as they are less challenging to encapsulate than solid to liquid PCMs as volume change does not need to be considered as much. Furthermore, as no liquid phase exists, there is no chance of PCM leaking during a phase transition and the safety of their application is improved which is especially important in the application of high temperature PCMs.

Phase change materials (PCMs) traditionally store and release thermal energy by undergoing melt/crystallisation cycles. PCMs can be used in multiple applications. PCMs can be used as: thermal stores (for example, in scenarios that hot water tanks are used), or high heat capacity bricks (clays, or magnetite or feolite or iron oxide containing blocks), and as thermal buffers (for example a PCM will thermally buffer an object that oscillates in temperature above and below the PCM transition temperature).

Potassium tetrafluoroborate (KBF₄) is an example of an inorganic salt that undergoes a solid to solid phase transition, sometimes known as a plastic deformation transition, or sometimes known as a polymorphic transition. In comparison to solid to solid transitions present in organic molecules such as pentaerythritol, the reported latent heats of these materials are lower. However, unlike organic materials, these materials do not degrade at higher temperatures (many organics degrade above 200°C), therefore allowing a wider useable temperature range) and are non-combustible.

The polymorphic transition of tetrafluoroborate salts has been of academic interest due to the interesting calorimetric properties. In this regard, we refer to Table 1 below.

**Table 1: Review of some inorganic salts that undergo solid to solid transitions.**

| Compound | transition point | density | latent heat | |
|---|---|---|---|---|
| | °C | kg dm⁻³ | kJ kg⁻¹ | kJ dm⁻³ |
| NaBF₄ | 238-247 | 2.47 | 61 | 150.67 |
| NH₄BF₄ | 189-236 | 1.87 | 87.7 | 164.09 |
| KBF₄ | 276-286 | 2.51 | 109.6 | 274.56 |
| LiBF₄ | -27 | | | |

There is a known problem in the field of PCMs of obtaining solid to solid phase change materials which can be used in heat batteries and which provide desired temperature ranges for phase changes. Very few of these materials are known to exist and there is a significant need and requirement for such materials for the development of heat batteries.

US 2018/265364 relates to a boronising powder composition for improved boride layer quality in oil country tubular goods and other medical articles.

US 2018/320987 relates to thermal storage units comprising a range of phase change materials, in particular, using carbon nanotubes.

US 2002/172634 relates to a process for the preparation of LIB4.

Petrov G S et al.: "Determination of heat capacity and enthalpies of phase transitions of ammonium, sodium and potassium tetrafluoroborates", Thermochimica Acta, Elsevier Publishers, Amsterdam, NL, vol.87, 15 May 1985 (1985-05-15), pages 381-383, XP026568610, ISSN: 0040-6031, DOI: 10. 1016/0040-6031 (85)85362-4. This document relates to a description of heat capacities and transitions of ammonium sodium and potassium tetrafluoroborates.

It is an object of at least one aspect of the present invention to obviate or mitigate at least one more of the aforementioned problems.

It is a further object of at least one aspect of the present invention to provide an improved phase change material that comprises tetrafluoroborate salts which undergo a solid to solid phase transition.

It is an object of at least one aspect of the present invention to provide a phase change material (PCM) which is a solid to solid phase transition material which provides a PCM active over a wide temperature range over any of the following: about -270°C to about 3,000°C; about -50°C to about 1,500°C; about 0°C to about 1,000°C; about 0°C to about 500°C; about 100°C to about 400°C; about 150°C to about 300°C; about 200°C to about 300°C; about 260°C to about 290°C; or about 270°C to about 280°C.

It is another object of at least one aspect of the present invention to provide a phase change material (PCM) which is a solid to solid transition material which provides a high temperature PCM active over a wide temperature range of about 0°C - 50°C or about 20°C - 30 °C.

It is another object of at least one aspect of the present invention to provide a phase change material (PCM) which is a solid to solid transition material which provides a high temperature PCM active over a wide temperature range of about 100°C - 200°C or about 135°C - 155°C.

It is another object of at least one aspect of the present invention that tetrafluoroborate salts can be used as solid to solid phase transition PCMs and as solid to liquid PCMs by utilising both transitions. In this scenario the PCM may reach temperatures of >1,500°C.

### Summary of the Invention

According to a first aspect of the present invention there is provided a heat battery comprising:
at least one or a plurality of tetrafluoroborate salts which has a solid to solid (polymorphic) transition;
wherein the PCM has a phase change in the region of about -270°C to about 3,000°C temperature range;
the PCM comprises tetrafluoroborate anions (BF₄⁻) which is part of an organic salt, inorganic salt and/or metal salt with the proviso that the PCM comprises no nucleating agent;
the PCM comprising tetrafluoroborate anions (BF₄⁻) has increased bulk density and is in a pressed (i.e. compacted) or melt cast form; and
wherein the PCM is capable of being repeatedly thermally cycled without any significant degradation to the PCM material.

The present invention relates to phase change materials (PCMs) comprising at least one or a plurality (e.g. a mixture) of tetrafluoroborate salts that are capable of undergoing a solid to solid phase transition. In particular, the present invention relates to phase change materials (PCMs) comprising at least one or a plurality (e.g. a mixture or range) of tetrafluoroborate salts where there is at least one or a plurality of tetrafluoroborate salts which are capable of having a solid to solid phase transition.

The tetrafluoroborate salts may be capable of at least one, two or more, three or more or a plurality of solid to solid phase transitions. The phase transitions may occur at different temperatures.

The phase change material (PCM) of the present invention may therefore function as a thermal storage material which comprises at least one or a plurality of solid to solid phase change materials (PCMs) wherein the phase change material (PCM) comprises the tetrafluoroborate anion (BF₄⁻). The tetrafluoroborate anion may be part of an organic salt, inorganic salt and/or metal salt.

The inorganic salt and/or metal salt of the tetrafluoroborate anion (BF₄⁻) may therefore function and be used as a material that changes phase between two solid phases.

The inorganic salt and/or metal salt of the tetrafluoroborate anion (BF₄⁻) may therefore be used for thermal storage and/or thermal buffering in, for example, a heat battery.

Other suitable applications of the phase change materials (PCMs) of the present invention include heat transportation and automotive applications.

Furthermore, the phase change materials (PCMs) of the present invention may also be used as barocaloric materials. This therefore permits the tetrafluoroborates of the present invention to be utilised as barocaloric materials, where the change in solid to solid transition point temperature under pressure may be exploited in, for example, a heat pump type scenario. This can be used for both heating and cooling generation, similar to a vapour compression heat pump.

The tetrafluoroborate salt may comprise at least one anion or a plurality of anions of tetrafluoroborate (e.g. BF4⁻).

A preferred tetrafluoroborate salt may be KBF₄ or may comprise substantially KBF₄.

The phase change material (PCM) may also comprise any one of or combination of the following additives: thermal conductivity improving additives; stabilising additives (e.g. shape stabilising additives) and/or transition point tuning stabilising additives.

In particular embodiments, the phase change material (PCM) of the present invention may comprise:
- One or more tetrafluoroborate salts in the following amounts: 10 - 100 wt.%; 20 - 100 wt.%; 30 - 100 wt.%; 40 - 60 wt.%; 50 - 100 wt.%; 50 - 90 wt.%; 60 - 90 wt.%; 70 - 90 wt.%; 10 - 90 wt.%; 20 - 90 wt.%; 30 - 90 wt.%; about 100 wt.%; and/or optionally
- One or more thermal conductivity improving additives in the following amounts: 0 - 30 wt.%; 2-20 wt.%; 5 - 15 wt.%; and/or optionally
- One or more stabilising additives in the following amounts: 0 - 40 wt.%; 0 - 30 wt.%; 0 - 20 wt.%; 3 - 30 wt.%; 5 - 15 wt.%; and/or optionally
- One or more transition point tuning stabilising additives in the following amounts: 0 - 40 wt.%; 0 - 30 wt.%; 0 - 20 wt.%; 3 - 30 wt.%; 5 - 15 wt.%.

By wt.% in the present application means weight percent which is sometimes written as w/w e.g. weight percent of the component in the phase change material (PCM).

The thermal conductivity improving additives, stabilising additives and transition point tuning stabilising additives may be optional components in the phase change material (PCM).

The stabilising additives may be shape stabilising additives which may be used to stabilise any shape formed by the PCM.

In particular embodiments, the phase change material (PCM) of the present invention may comprise KBF₄ in the following amounts: 10 - 100 wt.%; 20 - 100 wt.%; 30 - 100 wt.%; 40 - 60 wt.%; 50 - 100 wt.%; 10 - 90 wt.%; 20 - 90 wt.%; 50 - 90 wt.%; 60 - 90 wt.%; 70 - 90 wt.%; or about 100 wt.%.

The tetrafluoroborate salt may comprise a mixture of tetrafluoroborate salts such as KBF₄ and NH₄BF₄. In particular embodiments, the tetrafluoroborate salt may be about a 50:50 mol% molar ratio mixture of KBF₄ and NH₄BF₄. This is a mixture of about one mole of KBF₄ with about one mole of NH₄BF₄.

Alternatively, a mixture of tetrafluoroborate salts comprising KBF₄ and NH₄BF₄ may comprise a molar ratio mixture of: about 10 - 90 mol% of KBF₄ and 10 - 90 mol % of NH₄BF₄; about 20 - 80 mol% of KBF₄ and 20 - 80 mol% of NH₄BF₄; or about 30 - 60 mol% of KBF₄ and 30 - 60 mol% of NH₄BF₄.

By mol% in the present application means the percentage of the total moles that is of a particular component in the phase change material (PCM). Mole percent is equal to the mole fraction for the component multiplied by 100: mol % a = Xₐ × 100. The sum of the mole percents for each component in the phase change material (PCM) will be equal to 100.

Further particular embodiments may comprise any of the following: about 20 mol% KBF₄ and 80 mol% NH₄BF₄; about 40 mol% KBF₄ and 60 mol% NH₄BF₄; about 50 mol% KBF₄ and 50 mol% NH₄BF₄; about 60 mol% KBF₄ and 40 mol% NH₄BF₄; or about 90 mol% KBF₄ and 10 mol% NH₄BF₄

The present inventors have also found that the tetrafluoroborate salts of the present invention may be used to form phase change materials with a solid to solid phase transition with no requirement for a nucleating agent. This is a significant and surprising finding to the inventors.

The present inventors have found that it is possible to use tetrafluoroborate in a range of components such as salts and other related mixtures e.g. potassium tetrafluoroborate, other tetrafluoroborate salts, their mixtures and mixtures with other inorganic salts, without the use of a nucleating agent in a phase change material (PCM). By overcoming the requirement for a nucleating agent provides a number of technical advantages such as a cost-effective and very stable system which can be thermally cycled many times without any significant degradation to the tetrafluoroborate phase change material (PCM).

The phase change materials (PCMs) of the present invention may be repeatedly thermally cycled with very little or substantially no detrimental effect and no substantial degradation on the phase change material (PCM) itself. For example, the phase change materials (PCMs) may be repeatedly thermally cycled over temperature ranges described in the present invention such as up to: 10 thermal cycles; 50 thermal cycles; 70 thermal cycles; 100 thermal cycles; 200 thermal cycles; 500 thermal cycles; 1,000 thermal cycles; 5,000 thermal cycles; and 10,000 thermal cycles.

It has also been found that the tetrafluoroborate salts (e.g. KBF₄) may be used to form phase change materials without any stabilising additive, due to little degradation occurring in an open system (exposed to air/atmosphere). This is a significant advantage compared to many other PCMs that are air/moisture sensitive.

The tetrafluoroborate salts are in the form of a pressed (i.e. compacted) form such as a pressed pellet e.g. a pellet of pressed KBF₄. This has technical advantages due to the smoother surface of the pressed pellet which may result in improved contact with other devices. A further technical benefit is that is it increase the bulk density of the tetrafluoroborate salts.

Typically, the pressed tetrafluoroborate salts (e.g. KBF₄) may have improved physical properties such as thermal conductivity over, for example, melted tetrafluoroborate salts.

A metal salt of tetrafluoroborates of the present invention may comprise embodiments where the metal may be selected from any one of or any combination of the following tetrafluoroborate salts:
a. Lithium (Li)
b. Sodium (Na)
c. Potassium (K)
d. Rubidium (Rb)
e. Caesium (Cs)
f. Magnesium (Mg)
g. Calcium (Ca)
h. Strontium (Sr)
i. Barium (Ba
j. Iron (Fe)
k. Manganese (Mn)
l. Zinc (Zn)
m. Zirconium (Zr)
n. Titanium (Ti)
o. Cobalt (Co)
p. Aluminium Al)
q. Copper (Cu)
r. Nickel (Ni)

The PCM may have a solid to solid phase change in the region of: about -270°C to about 3,000°C; about -50°C to about 1,500°C; about 0°C to about 1,000°C; or about 0°C to about 500°C temperature range.

Alternatively, the present invention may provide a phase change material (PCM) which comprises a solid to solid transition material which provides a PCM active over a wide temperature range over any of the following: about -270°C to about 3,000°C; about -50°C to about 1,500°C; about -50°C to about 500°C; about 0°C to about 1,000°C; about 0°C to about 500°C; about 0°C to about 400°C; about 0°C to about 300°C; about 0°C to about 200°C; about 0°C to about 100°C; about 100°C - 400°C; about 150°C - 300°C; 200°C - 300°C; about 260°C - 290°C; or about 270°C - 280°C. The phase change material (PCM) of the present invention may be repeatedly thermally cycled within these temperature ranges with little or substantially no degradation of the phase change material (PCM).

In a further alternative, the present invention may provide a phase change material (PCM) which comprises a solid to solid transition material which provides a high temperature PCM active over a wide temperature range of about 0°C - 50°C or about 20°C - 30°C.

Furthermore, the present invention may provide a phase change material (PCM) which comprises a solid to solid transition material which provides a high temperature PCM active over a wide temperature range of about 100°C - 200°C or about 135°C - 155°C.

In the present invention, there is typically a solid to solid phase transition which takes place solely in the solid state. By changing temperature, a crystalline solid may be transformed into another crystalline solid without entering an isotropic liquid phase.

By having a solid to solid transition provides a number of technical advantages such as avoiding some regular hazards associated with hot, molten PCMs (PCMs that melt into a liquid), such as serious burns due to accidental leak or spillage risks and enhanced structural strength of the containment due to hydrostatic pressure. These technical advantages also make the tetrafluoroborate salt PCMs of the present invention suitable for heat transportation and automotive applications.

Solid to solid phase transitions in a PCM also provides the technical advantage of improved material compatibility in comparison to molten salts, for example (corrosion rates are much lower when in the solid phase), because most reaction have faster kinetics when a liquid phase is involved.

The tetrafluoroborate salt PCMs of the present invention may also be air and moisture stable in the atmosphere and may be stable under any desired shape.

A solid to solid phase transition also provides the technical effect of improved thermal stability (and wider temperature range) than comparable organic solid to solid PCMs (e.g. pentaerythritol).

The present inventors have found that tetrafluoroborate salts in PCMs provide a range of technical advantages which were previously unknown. In the prior art tetrafluoroborate salts have not previously been used in PCMs.

Tetrafluoroborate salts are reported as having latent heats ranging from about 50 - 110 kJ/kg.

In particular embodiments, the phase change materials (PCM) of the present invention may comprise any one of or combination of the following salts: LiBF₄, NaBF₄, KBF₄, RbBF₄ and NH₄BF₄.

To determine whether mixtures of these could form new solid to solid PCMs, the mixtures NaBF₄ + KBF₄, LiBF₄ + KBF₄ and NH₄BF₄ + KBF₄ were tested using vial scale thermal cycling, DSC and variable temperature X-ray diffraction. Some excellent compositions were found, for example, NH₄BF₄ + KBF₄ form a successful PCM mixture with a new transition temperature of about 210°C - 225°C and more precisely about 218°C.

Tetrafluoroborate salts have been identified by the present inventors as potential PCMs which undergo solid to solid phase transitions. The tetrafluoroborate anion is a non-coordinating ion, and therefore it interacts weakly with the cation in the complex. Although not wishing to be bound by theory it is possible that this behaviour facilitates the solid to solid transition. The mineral Avogadrite occurs naturally as a mixture of the salts CsBF₄ and KBF₄ with about a 1:3 molar ratio. The present invention therefore includes phase change materials comprising CsBF₄ and KBF₄.

The tetrafluoroborate anion (BF₄⁻) is negatively charged, and as such it requires a cation to balance the charge. The cation may be a number of compound/molecules/atoms, as long as it is a positively charged ion (e.g. a cation).

The cation may be selected from any one of or combination of the following:
a metal cation, such as Li+, Na+, K+, Cs+, Rb+, Mg2+, Sr2+, Fe2+, Fe3+, Pt+, AI3+, Ag+, etc.:
an inorganic cation, such as NH4+, NO2+, NH2-NH3+ (Hydrazinium), etc.;
an organic cation, such as 1-Ethyl-3-methylimidazolium; or
other cations that may be found in an ionic liquid.

A preferred cation may be selected from any one of or combination of the following: Li+, NH4+, Na+, K+, Mg2+, Ca2+. These cations are plentiful and are easily obtained.

The PCM may comprise any one of or a combination of tetrafluoroborates (BF₄⁻) salts.

The PCM may form a thermal storage medium which comprises a number of other components and/or additives that may act as:
a. Thermal conductivity enhancers
b. Shape stabilising
c. Processing aids

The PCM may also comprise a range of other non-tetrafluoroborate salts to alter the transition temperature of the tetrafluoroborate salt. The solid to solid transition temperature may therefore be adapted and changed for a range of applications and conditions.

A technical advantage of using inorganic salts herein defined such as tetrafluoroborates (BF₄'s) is that they are stable at high temperature. PCMs comprising tetrafluoroborates have also been found to be active over wide temperature ranges (e.g. -270°C to 3,000°C and -50°C to 1,500°C).

By utilising a solid to solid transition has the specific technical advantage of avoiding hazards associated with hot, molten PCMs (primarily serious burns due to accidental leak or spillage).

The solid to solid transition also provides the technical advantages of improved material compatibility in comparison to molten salts e.g. corrosion rates are much lower when in the solid phase and there is also improved thermal stability (and wider temperature range) than comparable organic solid to solid PCMs (e.g. pentaerythritol).

The PCM may comprise at least one of or a combination of any of the following non-limiting list of inorganic tetrafluoroborate salts:
potassium tetrafluoroborate (KBF₄);
NaBF4;
NH₄BF₄;
LiBF₄;
Sr(BF₄)₂;
Ca(BF₄)₂;
NH₄H(BF₄)₂;
(NH₄)₃H(BF₄)₄;
Ba(BF₄)₂;
Cr(BF₄)₂;
Pb(BF₄)₂;
Mg(BF₄)₂;
AgBF₄;
RbBF₄;
Ba(ClO₄)₂;
CsBF4;
Zn(BF₄)₂;
Fe(BF₄)₂;
Fe(BF₄)₃;
Ni(BF₄)₂;
Ni(BF₄)₃;
Mn(BF₄)₂;
Co(BF4)2; and
Zn(BF₄)₂.

The tetrafluoroborate salt itself may also be a hydrate, or another solvate such as one formed with ammonia (an ammoniate).

An example of a hydrated tetrafluoroborate salt may be magnesium tetrafluoroborate hexahydrate ([Mg(H₂O)₆](BF₄)₂, also can be written as Mg(BF₄)₂·6H₂O).

Typically, the inorganic tetrafluoroborate salts may be present in any of the following amounts: between about 10 wt.% and about 95 wt.%; between about 10 wt.% and about 95 wt.%; between about 10 wt.% and about 50 wt.%; between about 25 wt.% and about 50 wt.%; between about 10 wt.% and about 30 wt.%; or between about 10 wt.% and about 20 wt.%.

Magnesium tetrafluoroborate hexahydrate has a solid to solid phase transition at about -14°C, an excellent temperature for cooling applications. The manganese tetrafluoroborate hexahydrate analogue has a solid to solid transition at around -20°C, the iron tetrafluoroborate hexahydrate analogue has a solid to solid transition at around -4°C, the cobalt tetrafluoroborate hexahydrate analogue has a solid to solid transition at around +7°C, the zinc tetrafluoroborate hexahydrate analogue has a solid to solid phase transition around 11°C. These compounds all have general structure of M(BF₄)₂·6H₂O, where M is a 2+ metal.

The tetrafluoroborate salt may be present in a pure form or substantially pure form.

In particular embodiments, the tetrafluoroborate salt may comprise two or more tetrafluoroborate salts forming a new phase change material with a single temperate i.e. solid to solid phase transition.

Preferred mixtures of tetrafluoroborate salt PCM materials include any combination of the following: KBF₄, NH₄BF₄, LiBF₄, NaBF₄ and/or RbBF₄. A particularly preferred mixture may be KBF₄ and NH₄BF₄. The mixtures may be mixtures of about 50 mol% of each material. Alternatively, each tetrafluoroborate salt may range from about 10 - 90 mol%; about 20 - 80 mol%; about 30 - 70 mol%; about 40 - 60 mol%; about 10 - 30 mol%; or about 10 - 20 mol% of the phase change material.

Particularly preferred tetrafluoroborates mixtures include mixtures of LiBF₄ and KBF₄ which may, for example, contain between about 10 mol% and about 90 mol% LiBF₄; between about 25 mol% and about 50 mol% LiBF₄; between about 10 mol% and about 30 mol% LiBF₄; or between about 10 mol% and about 20 mol% LiBF₄, with the remainder being another tetrafluoroborate salt, for example, KBF₄. Typically, the tetrafluoroborates mixture with KBF₄ may comprise about 25 mol% or about 50 mol% LiBF₄ of the phase change material, with the remainder being KBF₄.

Alternatively, preferred KBF₄ mixtures may include between about 10 mol% and about 90 mol% NaBF₄; or between about 25 mol% and about 50 mol% NaBF₄; between about 10 mol% and about 30 mol% NaBF₄; or between about 10 mol% and about 20 mol% NaBF₄. Typically, the tetrafluoroborates mixture with KBF₄ may comprise about 25 mol% or about 50 mol% NaBF₄ of the phase change material.

Alternatively, in order to obtain a PCM that has a tuned melting point, tetrafluoroborates salts can be mixed together in order to form a new temperature (or temperature range) of PCMs. This may occur through a process based on melting point depressants. It is well known that mixtures of chemical components have a melting point below that of either individual parent compound (excluding any other process such as a reaction taking place). A common example of this is the mixing of sodium chloride and water - these when mixed produce a mixture that has a melting point below that of either, pure, parent compound. The same effect can be used with solid to solid tetrafluoroborate PCMs in order to reach a new temperature of transition.

The sodium chloride - water melting point depressant example is a demonstration of colligative properties. Colligative properties are often considered to be only applicable to solutions, but the present inventors here have discovered that this is false. To the inventors surprise, the concept of colligative properties also holds true with solid to solid phase transition PCMs with respect to the temperature of their solid to solid phase changes point (the transition point).

The tetrafluoroborates salts of the present invention may also be formed using melt casting.

An alternative method to alter the solid to solid phase transition temperature is to change the pressure. The present inventors have therefore found that it is possible via compression to alter the solid to solid phase transition temperature of the tetrafluoroborates of the present invention.

Typically, for a solid to liquid phase transition the amount of pressure required to increase the melting point is proportional to the change in volume during the phase change, and can be approximated with the Clausius-Clapeyron relation: dp/dT = L/(T(Vv-VI), where dp is the difference in pressure, dT is the difference in the transition point, where L is the latent heat of transition, and Vv and VI are the specific volumes at temperature T of the high temperature phase and low temperature phases, respectively. This allows tuning of the transition point by, for example, increasing the pressure in order to increase the transition point. To the present inventors surprise, the Clausius-Clapeyron relation also holds true for solid to solid phase change temperature and pressure relationship (e.g. the transition point).

This therefore permits tetrafluoroborates to be employed as barocaloric materials, where the change in solid to solid transition point temperature under pressure is exploited in a heat pump type scenario. This can be used for both heating and cooling generation, similar to a vapour compression heat pump.

There may be at least one or a plurality of heat batteries.

The heat batteries may be connected in series and/or parallel.

The heat battery may be a device that contains a thermal storage medium (preferably a tetrafluoroborate solid to solid phase change material).

The heat battery may also comprise a device for extracting and adding thermal energy (such as one or more heat exchangers) and include structural containment vessel of the PCM and optionally insulation. A technical advantage of a PCM that has a transition temperature below about 350°C is that thermal oil can be used in a PCM to oil heat exchanger, this is an advantageous compared to higher temperature PCMs that would require molten salt as the heat transfer fluid. Alternatively, air can be utilised as the heat transfer fluid.

In particular embodiments, the structural containment vessel of the PCM may be any suitable type of receptacle. For example, the receptacle may comprise a cylindrical member with an attachable cap which may be a screw-on cap. The structural containment vessel may be made from any suitable material such as stainless steel. The structural containment vessel may also before the functions of a heat exchanger.

The heat battery according to the present invention will be designed to facilitate the storage of thermal energy in an environmentally friendly manner and safe method for an end user.

According to a third aspect of the present invention there is provided use of a solid to solid phase change material (PCM) in a heat battery as defined in the first aspect.

According to a fourth aspect of the present invention there is provided use of a solid to solid phase change material (PCM) as herein described in transportation and automotive applications.

According to fifth aspect of the present invention there is provided use of a solid to solid phase change material (PCM) in a heat battery as herein described in the formation of barocaloric materials where the solid to solid phase transition point of the phase change material (PCM) is capable of being adapted and changed under pressure.

### Description of the Figures

Embodiments of the present invention will now be described, by way of example only, with reference to the following Figures:
Figure 1 is a graph showing the thermal cycling of potassium tetrafluoroborate (KBF₄) according to an embodiment of the present invention;
Figure 2 is a graph showing the simultaneous thermal analysis of KBF₄ performed from 25°C to 350°C according to an embodiment of the present invention;
Figure 3 is a graph showing the simultaneous thermal analysis of KBF₄ from 25°C to 550°C according to an embodiment of the present invention;
Figure 4 is a graph showing first and third thermal cycling of a 50:50 mol% KBF₄ - NH₄BF₄ mixture according to an embodiment of the present invention;

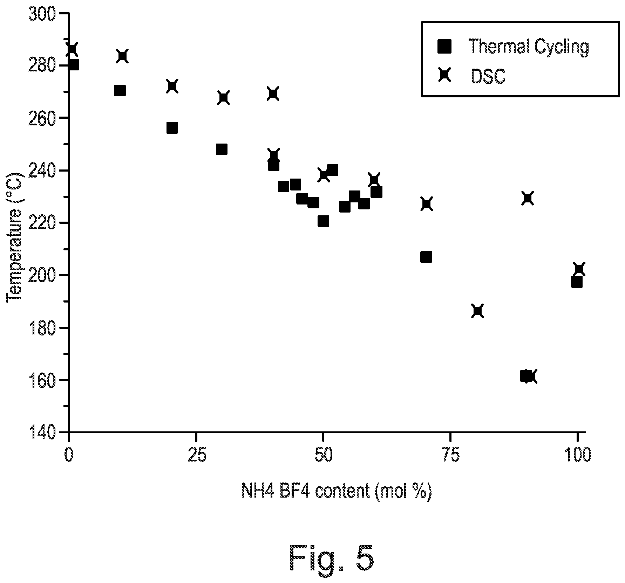

Figure 5 is a graph showing the phase diagram of a NH₄BF₄ - KBF₄ phase change material (PCM) according to an embodiment of the present invention;
Figure 6 is the DSC analysis of KBF₄ using apparatus from Mettler Toledo according to an embodiment of the present invention;
Figure 7 is the DSC analysis of KBF₄ using TA instruments DSC 2500 according to an embodiment of the present invention;
Figure 8 is a representation of calibrated heat capacity measurements carried out using a sapphire standard according to an embodiment of the present invention;
Figure 9 is a comparison of thermal conductivity results of melted and pressed KBF₄ vs other inorganic compounds, Na₃PO₄ and borax according to an embodiment of the present invention;
Figure 10 is a DSC analysis performed between 75°C and 350°C of KBF₄ after 10 thermal cycles between 450°C and 600°C using TA Instruments DSC 2500 according to an embodiment of the present invention;
Figure 11 is a representation of the thermal performance of an aluminium heat battery containing KBF₄: a) on the top of Figure 11 this shows both the charging and discharging of the heat battery over one thermal cycle; b) on the bottom of Figure 11 this shows a more detailed look at the charging following the input and output temperature of the heat exchange fluid, as well as the accumulative energy used during charging according to an embodiment of the present invention;
Figure 12 is a representation of thermal cycling over 25 cycles using an aluminium heat exchanger with molten KBF₄ according to an embodiment of the present invention;
Figure 13 is a representation of thermal cycling data for KBF₄ and NaBF₄ up to 350°C and for NH₄BF₄ up to 250°C according to an embodiment of the present invention;
Figure 14 is a representation of powder X-ray diffraction patterns of anhydrous LiBF₄ cycled between 0°C and 50°C according to an embodiment of the present invention;
Figure 15 is a representation of powder X-ray diffraction patterns for NaBF₄ thermally cycled between 50°C and 350°C according to an embodiment of the present invention;
Figure 16 is a representation of RbBF₄ salt cycled between 20°C and 300°C and powder patterns collected for the transition of the salt according to an embodiment of the present invention;
Figure 17 is a representation showing thermal cycling of LiBF₄ and KBF₄ between room temperature and 350°C containing 25 mol% and 50 mol% LiBF₄ according to an embodiment of the present invention;
Figure 18 shows the thermal cycling of 50 mol% LiBF₄ and KBF₄ mixture cycled up to 350°C according to an embodiment of the present invention;
Figure 19 shows the normalised variable temperature powder patterns for LiBF₄ and KBF₄ mixture for, A - low temperature before cycling, B - mid heating transition, C - high temperature phase, D - mid cooling transition and E - low temperature phase after transition according to an embodiment of the present invention;
Figure 20 shows the variable temperature powder patterns for LiBF₄ and KBF₄ mixture for, A - low temperature before cycling, B- mid heating transition, C- high temperature phase, D mid cooling transition and E - low temperature phase after transition according to an embodiment of the present invention;
Figure 21 shows powder patterns in 5° - 25° range comparing KBF₄ simulated data (306°C) and LiBF₄ (80°C) data with LiBF₄ and KBF₄ (291°C) according to an embodiment of the present invention;
Figure 22 is a representation of the phase transition on heating to 291 °C, also shown in powder pattern top of Figure 21 according to an embodiment of the present invention;
Figure 23 therefore represents thermal cycling of NaBF₄ and KBF₄ mixtures between room temperature and 350°C, containing 25 mol% and 50 mol% LiBF₄ according to an embodiment of the present invention;
Figure 24 is a representation of thermal cycling of 50 mol% NaBF₄ and KBF₄ mixture up to 350°C according to an embodiment of the present invention;
Figure 25 is a representation of thermal cycling of 50 mol% mixture of NH₄BF₄ and KBF₄ cycled between 50°C and 350°C according to an embodiment of the present invention;
Figure 26 is a DSC representation of uncycled 50 mol% NH₄BF₄ and KBF₄ cycled between ambient and 300°C at a rate of 10°C min⁻¹ according to an embodiment of the present invention;
Figure 27 is a DSC representation of third cycle of 50 mol% NH₄BF₄ and KBF₄ cycled between ambient and 300 °C at a rate of 2°C min⁻¹ according to an embodiment of the present invention;
Figure 28 is a representation of powder patterns for the collected high temperature phases for KBF₄, NH₄BF₄ and their mixture according to an embodiment of the present invention;
Figure 29 is a comparison of DSC data collected for varying compositions of NH₄BF₄ and KBF₄ mixture according to an embodiment of the present invention; and
Figure 30 is a phase diagram constructed using DSC data and thermal cycling data where the 40 and 90 mol% compositions have two data points as two transitions were observed in DSC data according to an embodiment of the present invention;

### DETAILED DESCRIPTION

The present invention relates to phase change materials (PCMs) comprising of the tetrafluoroborate anion where there is a solid to solid phase transition; and wherein the PCM has a phase change in the region of: about -270°C to about 3,000°C; about -50°C to about 1,500°C; about 0°C to about 1,000°C; about 0°C to about 500°C; about 100°C to about 400°C; about 150°C to about 300°C; about 200°C to about 300°C; about 260°C to about 290°C; or about 270°C to about 280°C.

The present invention therefore relates to phase change materials (PCMs) comprising at least one or a plurality (e.g. a mixture) of tetrafluoroborate salts that undergo a solid to solid phase transition.

In particular, the present invention relates to phase change materials (PCMs) comprising at least one or a plurality (e.g. a mixture or range) of tetrafluoroborate salts where there is at least one tetrafluoroborate salt which has a solid to solid transition.

The tetrafluoroborate salt may comprise at least one anion or a plurality of anions of tetrafluoroborate (e.g. BF₄⁻).

The PCM may typically have a solid to solid phase change in the region of about -50°C to about 1,500°C, about 0°C to about 1,000°C or about 0°C to about 500°C temperature range.

Alternatively, the present invention provides a phase change material (PCM) which comprises a solid to solid transition material which provides a PCM active over a wide temperature range over any of the following: about -270°C to about 3,000°C; about -50°C to about 1,500°C; about 0°C to about 1,000°C; about 0°C to about 500°C; about 100°C to about 400°C; about 150°C to about 300°C; about 200°C to about 300°C; about 260°C to about 290°C; or about 270°C to about 280°C.

In a further preferred alternative, the present invention provides a phase change material (PCM) which comprises a solid to solid transition material which provides a high temperature PCM active over a wide temperature range of about 0°C - 50°C or about 20°C - 30°C.

It has been found that the tetrafluoroborate salts of the present invention have a distinct advantage over other high temperature phase change materials with regards to safety. As the high-temperature phase is a solid, as opposed to a liquid, the hazards involved with accidental spillage or handling are considerably reduced. The tetrafluoroborate salts are also non-flammable, as opposed to organic solid to solid PCMs that have been previously discussed in the literature. A solid high temperature phase should correspond to improved compatibility with a wider range of materials, in comparison to molten salts. The tetrafluoroborate salts therefore found by the inventors of the present application have significant technical advantages in the formation of phase change materials which may be used in heat batteries.

The present invention centres on the use of the polymorphism in tetrafluoroborate salts where there is at least one solid to solid phase transition and the tetrafluoroborate salt is to be used as a phase change material (PCM). The energy of the thermally driven transition can be utilised as a phase change material for thermal energy storage such as in heat batteries.

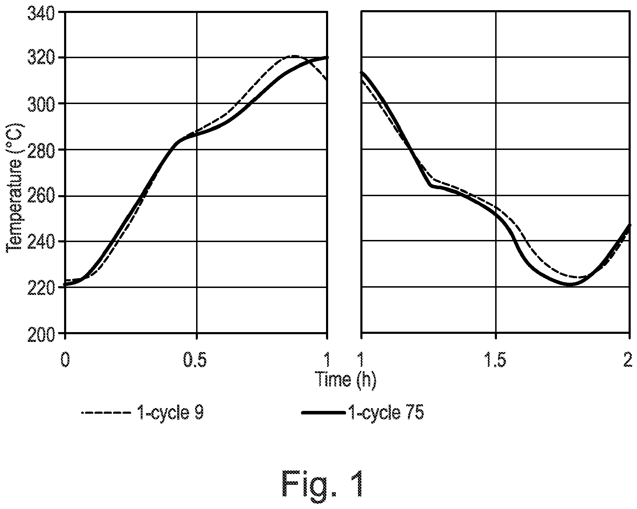

Figure 1 is a graph showing the thermal recycling of potassium tetrafluoroborate (KBF₄).

Initial small-scale experiments of potassium tetrafluoroborate (KBF₄) were set up using, for example, about 14 g of potassium tetrafluoroborate.

The results in Figure 1 show that KBF₄ cycled reproducibly, showing little to no degradation after a large number of cycles such as about 75 thermal cycles. Figure 1 shows a comparison between the potassium tetrafluoroborate being thermally cycled 9 and 75 times. There is very little difference and therefore very little degradation of the tetrafluoroborate salts phase change material.

The results show there is some hysteresis between the transition temperatures on heating and cooling, with the transition upon heating occurring at about 289°C and upon cooling at about 265°C.

However, there is no observation of supercooling during any of the 75 cycles - showing that KBF₄ can be used without a nucleating agent. This is an important point and surprising finding to the inventors.

The present inventors have found that it is possible to use tetrafluoroborate in a range of components such as salts and other related mixtures e.g. potassium tetrafluoroborate, other tetrafluoroborate salts, their mixtures and mixtures with other inorganic salts, without the use of a nucleating agent in a phase change material (PCM). By overcoming the requirement for a nucleating agent provides a number of technical advantages such as a cost-effective and very stable system which can be thermally cycled many times without any significant degradation to the tetrafluoroborate phase change material (PCM).

As shown in Figure 1, the results also show that KBF₄ could be used without any stabilising additive, due to little degradation occurring in an open system (exposed to air/atmosphere). This is a significant advantage compared to many other PCMs that are air/moisture sensitive.

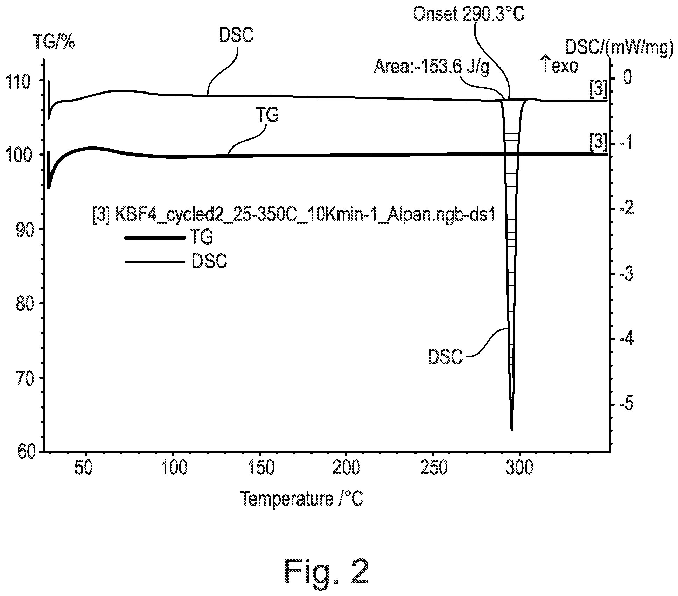

In Figure 2, there is Simultaneous Thermal Analysis (STA) using a combination of Differential Scanning Calorimetry (DSC) and Thermogravimetric Analysis (TGA) of KBF₄.

Figure 2 shows that the enthalpy of the phase transition differs compared to the value reported in the literature, giving a latent heat of about 153 J g⁻¹. Due to the density of KBF₄ this results in a volumetric latent heat of about 384 J cm⁻³. This is an excellent value for a PCM which is previously unknown to date.

The thermal analysis also shows that there is no loss in mass, showing that KBF₄ does not thermally degrade or undergo any significant changes with heating to about 350°C.

KBF₄ has also been successfully thermally cycled with both stainless steel and aluminium for 75 cycles, showing no signs of degradation - with the STA results obtained from these samples showing no discernible difference from the STA results prior to cycling. Therefore, proving that KBF₄ is compatible with both materials up to about 350 °C. These materials which could therefore be made into containers and/or heat exchangers. Samples containing copper and a cupronickel alloy were also thermally cycled, however there were clear signs of degradation of the metal (most likely due to air, not the KBF₄).

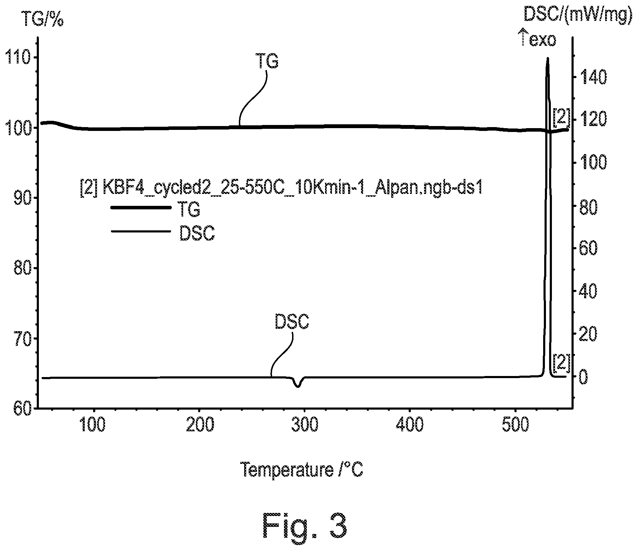

Figure 3 is a graph showing the Simultaneous Thermal Analysis (STA) of KBF₄ from about 25°C to about 550°C when contained in an aluminium DSC pan according to an embodiment of the present invention.

Figure 3 shows that a sample of KBF₄ was heated to about 550°C to see whether the sample would melt or thermally degrade at about 530°C, as both had been cited in the literature. However, a large exothermal peak was observed at about 530°C, accompanied by little to no mass loss, as shown in Figure 3.

As the pan used to hold the sample was made from aluminium, it is suspected that the sample had reacted with the pan, likely via a substitution reaction, creating element boron and potassium tetrafluoroaluminate (KAIF₄). This clearly defines a useable temperature range when KBF₄ is being contained with aluminium, limiting to a maximum temperature of about 500°C.

The inventors have also found that it is possible to tailor the transition temperature of the solid to solid tetrafluoroborate salt PCMs of the present invention. This can be achieved by changing the colligative properties (similar to depressing the melting point of ice by adding salt), resulting in more available temperatures of PCM.

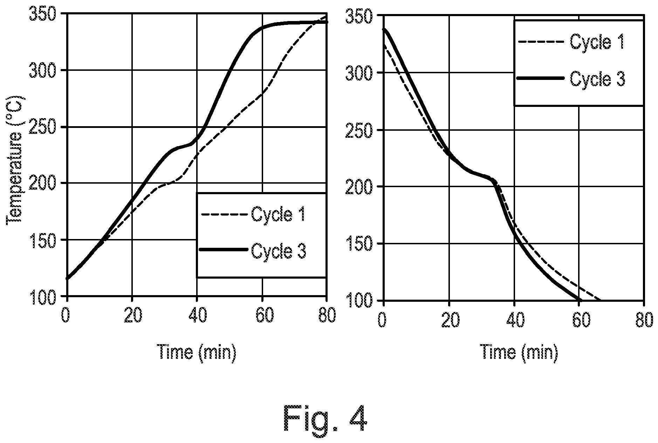

Work was performed into the effect of mixing solid to solid tetrafluoroborate salt PCM materials. Several tetrafluoroborate salts were investigated using any combinations of the following: KBF₄, NH₄BF₄, LiBF₄, NaBF₄ and RbBF₄. The most interesting results were seen when mixing KBF₄ with NH₄BF₄, as shown in Figure 4. Initial heating saw two thermal events - equivalent to the transitions of NH₄BF₄ and KBF₄, respectively. However, on cooling only one thermal event was observed, and this remained the case with further thermal cycling. This indicates the formation of a new phase or eutectic.

To further investigate this appearance of one thermal event, in depth thermal cycling experiments with varying NH₄BF₄ amounts were performed, with accompanying DSC thermal analysis.

The data, shown in **Error! Reference source not found.,** indicates a eutectic composition present around the 50 mol% composition. However, unlike a traditional eutectic, which would occur at a lower temperature point than the transition temperature of its two composites, this eutectic lies between the two temperature points.

### Thermal Characterisation of KBF₄

The last reported thermal analysis of potassium tetrafluoroborate was in the 1990's. Therefore, to ensure that the latent heat values were accurate, thermal analysis was performed using DSC.

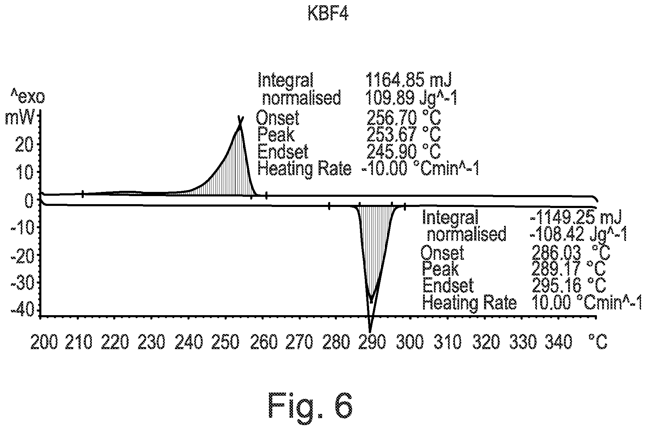

Figure 6 is therefore the DSC analysis of KBF₄ using apparatus from Mettler Toledo.

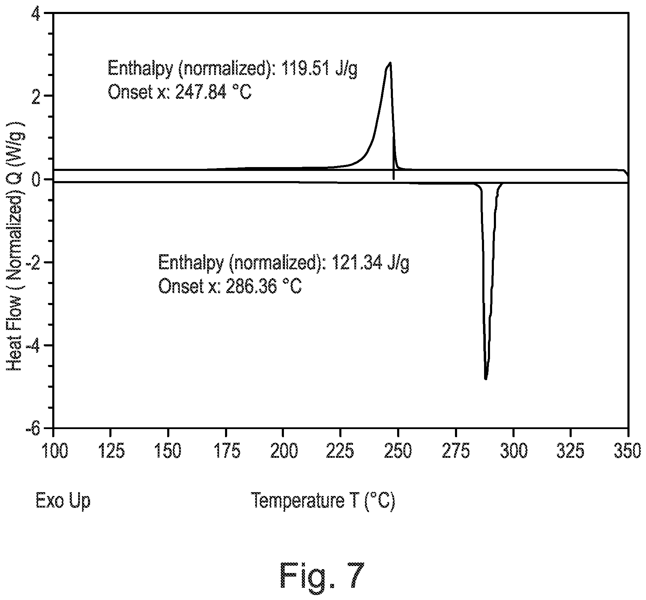

The analysis was performed using two different DSCs - one from Mettler Toledo, and another from TA Instruments, to ensure the results were not instrument dependent. The results from MT shown in Figure **6Error! Reference source not found.** give a latent heat of 109 J g⁻¹, whereas the TA instrument analysis, shown in Figure 7, gives a latent heat of 120 J g⁻¹. Both results show hysteresis of the transition on cooling, which has also been observed at larger scales with temperature v time graphs. This is exaggerated in a DSC due to the small sample mass (5-20 mg scale).

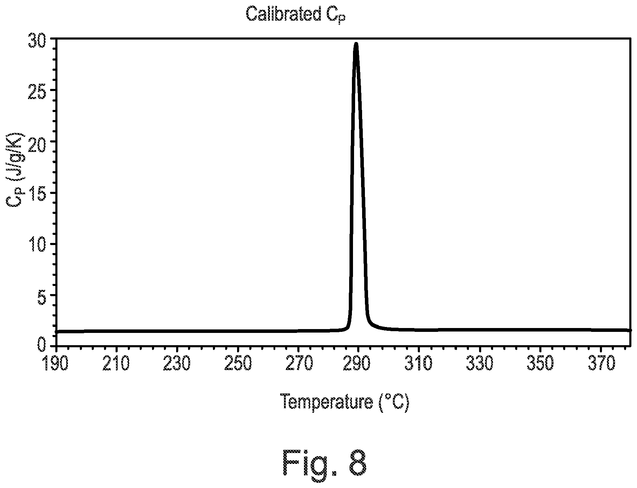

Calibrated heat capacity measurements were also carried out using a sapphire standard. Using several different heating rates with multiple samples, an average heat capacity was calculated. The result is shown in Figure 8 which shows calibrated heat capacity measurements of KBF₄ using heating rate 2 K min⁻¹.

Reported values for heat capacity are quoted at 1.1 to 1.2 J g⁻¹ K⁻¹ between 190°C to 290°C, and 1.1 to 1.15 J g⁻¹ K⁻¹ between 290 and 390°C. Experimental values gained from the calibrated DSC analysis are higher than this, however, with an average Cp of 1.4 J g⁻¹ K⁻¹ prior to the phase transition (190-290°C) and 1.6 J g⁻¹ K⁻¹ after the phase transition (290-390°C). This is a significant result as the larger heat capacity will increase the overall heat storage capacity and therefore is a surprising finding.

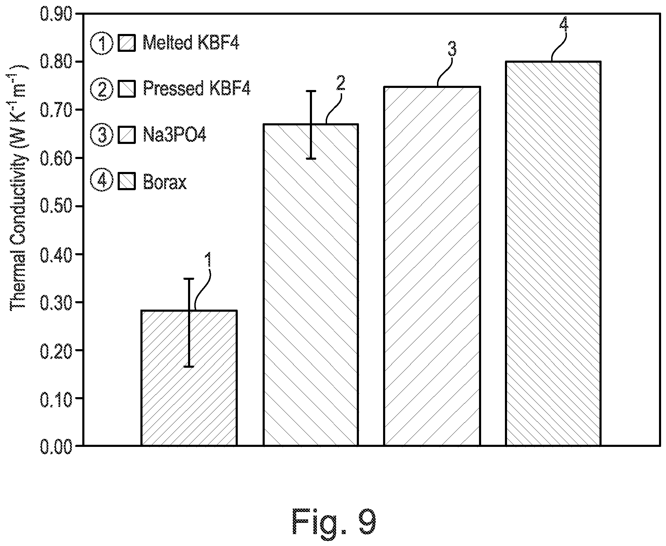

The thermal conductivity of the material was also investigated. The initial test was performed using puck (flat disk) of KBF₄ that had been melted in a glassy carbon crucible. These results, using the C-Therm analyser, seemed low in comparison to other inorganic salts, as shown in Figure 9.

Figure 9 therefore shows a comparison of thermal conductivity results of melted and pressed KBF₄ vs other inorganic compounds, Na₃PO₄ and borax. As shown the pressed (i.e. compacted) KBF₄ has improved thermal conductivity.

The analysis was repeated, this time using a pellet of pressed KBF₄. These results were more aligned to the expected values, likely due the smoother surface of the pressed pellet which resulted in better contact with the probe and less contact with air. This is an important teaching: a melt cast KBF₄ sample had greater bulk density, but the surface was more irregular and therefore reduced heat transfer. The thermal conductivity of the material is still low, and therefore the addition of either a heat exchanger, or an additive such as graphite, is required to allow for efficient heat extraction from the material.

Usage of thermally conductivity enhancers, such as graphite, graphene, boron nitride, can often increase the rate of corrosion due to galvanic corrosion, especially with graphite, and these additives have a risk of sedimenting out, due to their higher density. In the solid to solid tetrafluoroborate based PCMs, this is not an issue as the PCM is a solid, not a liquid, and so segregation of the additives cannot occur. Also due to the solid nature of the PCM, corrosion is severely limited and is not detectable, even with graphite.

A summary of the thermal analysis and the new total calculated energy capacity of KBF₄ are shown below in Table 2. The new energy densities, particularly over the 500°C temperature range, easily overshadow common, cheap sensible heat storage materials such as clay and concrete and feolite etc.

**Table 2: Summary of thermal properties of KBF₄ from experimental results**

| | **ΔH** | **S1 C*_{P}*** | **S2 C*_{P}*** | **K** | **H (Δ 250 °C)** | | **H (Δ 500 °C)** | |
|---|---|---|---|---|---|---|---|---|
| | J g⁻¹ | J K⁻¹ g⁻¹ | J K⁻¹ g⁻¹ | W m⁻¹ K⁻¹ | J g⁻¹ | J cm⁻³ | J g⁻¹ | J cm⁻³ |
| Lit. | 120 | 1.15 | 1.1 | N/A | 407 | 1021 | 695 | 1744 |
| Expt. | 109-120 | 1.4 | 1.6 | 0.67 | 490 | 1225 | 865 | 2162 |

Compatibility of a PCM with different metals is incredibly important when designing and building a containment vessel, and potentially a heat exchanger, of a heat storage device. During the initial thermal cycling experiment of potassium tetrafluoroborate, metal samples were submerged in KBF₄ and heated between 200°C and 350°C for 75 cycles. These included copper and aluminium - metals commonly used as the material for heat exchangers in Heat Batteries - a cupronickel alloy, and the stainless steel (SS316) vials that contained the experiment. Copper shows clear signs of corrosion, however, this may be a result of heating over 200°C exposed to oxygen, as this is known to form cupric oxide (CuO) which is often flakey in appearance. The cupronickel alloy shows less structural damage, but oxidation to form CuO has still occurred due to the formation of the black layer on the surface of the metal. The sample of aluminium appears to have suffered no visible damage or corrosion after 75 thermal cycles - suggesting its suitability as a containment material. The stainless-steel vials also were unchanged after thermal cycling, therefore would also be a good containment material.

### Applying Heat to KBF₄

Potassium tetrafluoroborate is reported to thermally degrade at high temperatures (no specific temperature value was found in the prior art, only 'fire conditions') and to decompose into hazardous decomposition products - hydrogen fluoride, borane oxides and potassium oxides. A low temperature fire (barely visible flame) burns at around 525 °C, which is just below the melting temperature of KBF₄. Melting is the easiest way to increase bulk density from powder, therefore, the stability of KBF₄ was investigated up to temperatures of 600°C by heating in a glassy carbon crucible. After 10 melting and freezing cycles, a sample was thermally analysed using DSC.

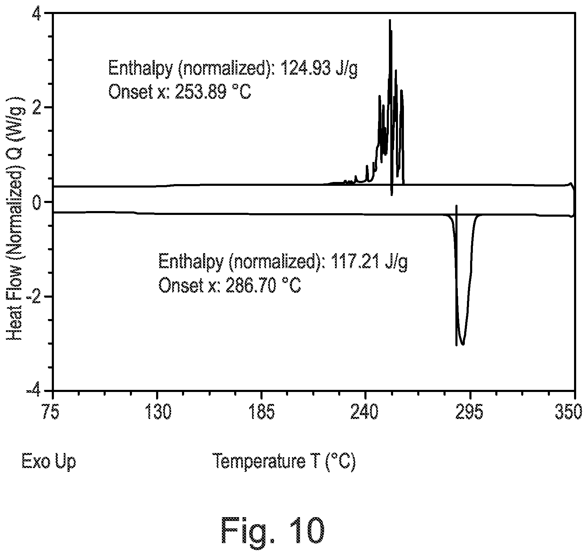

The results, shown in Figure 10, show no change in latent heat from the pure, uncycled sample. In conclusion, this assures that no degradation occurs when melting KBF₄, which enables melting as a potential route to increasing bulk density of the material. This also assures the safety of workers working with, and in the vicinity of, the material at high temperatures.

Figure 10 therefore shows DSC analysis of KBF₄ after 10 thermal cycles between 450°C and 600°C using TA Instruments DSC 2500.

This further shows the stability and technical advantage of using potassium tetrafluoroborate as a phase change material which had not previously been considered.

### Large Scale Testing

The thermal analysis of potassium tetrafluoroborate had shown that the total energy density (from latent heat and heat capacity) was in fact greater than the reported values in the literature, and could easily compete with, if not surpass, the performance of materials commercially used for high temperature heat storage in the current market. Materials compatibility had discovered aluminium, used below 500°C, and stainless steel to be suitable containment materials.

Therefore, a large-scale supplier of KBF₄ was found, and quality tests showed excellent comparability to the laboratory grade KBF₄, with no discernible difference in thermal characteristics or impurities. This then allowed two large scale tests to go ahead: one using a Heat Battery infrastructure, an aluminium finned-tube heat exchanger; the other an Alternative Design that removed the need for an internal heat exchanger.

### Heat Battery

Potassium tetrafluoroborate as received from the supplier, was a very fine powder. This permitted a 17-litre heat battery could be filled with relative ease, as the pourability of the powder allowed it to flow in and around the fins. Once filled, the heat battery was connected to a Julabo High Temperature Circulator, which proceeded to heat up and pump thermal oil around the system. This set-up allowed several thermal cycles to be recorded.

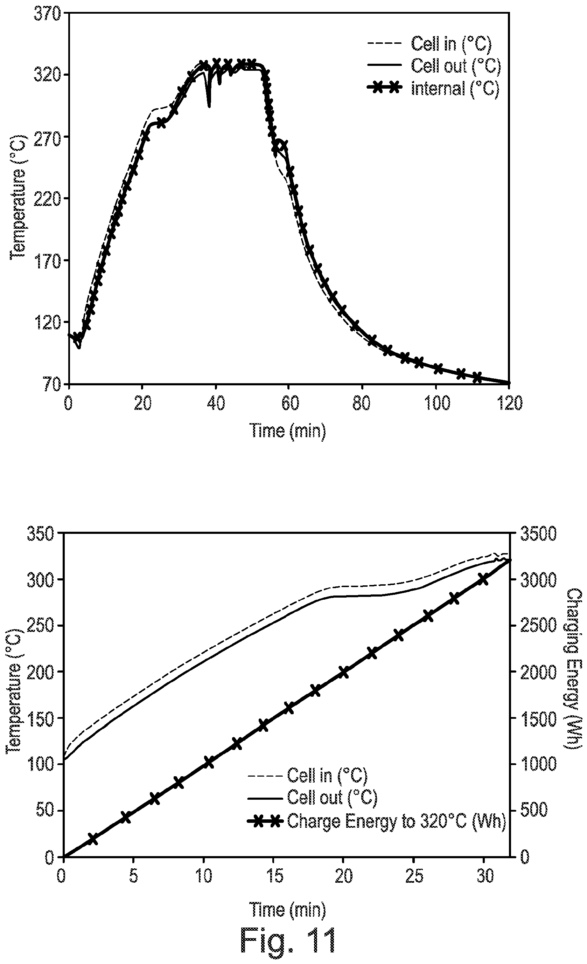

Thermocouples had been placed strategically throughout the heat battery, but most importantly in oil flowing in and out of the cell, as well as the internal temperature of the KBF₄ material. The performance of the heat battery during charging and discharging is shown in Figure 11.

Figure 11 is a representation of the thermal performance of an aluminium heat battery containing KBF₄: a) on the top of Figure 11 this shows both the charging and discharging of the heat battery over one thermal cycle; b) on the bottom of Figure 11 shows a more detailed look at the charging following the input and output temperature of the heat exchange fluid, as well as the accumulative energy used during charging.

The plateaux of the phase transition were clearly seen during both charging and discharging. There is only a slight lag between the input, output temperature and the internal temperature of the material, therefore the heat exchanger appears to be effectively dispersing the inputted heat to the material. This shows that a finned-tube heat exchanger can still be effective when used with a powdered material, which will have significant total air gaps.

The thermal properties of the heat battery were extrapolated, and are shown below in Table 3. The calculated specific heats before and after the phase transition, in particular, are somewhat higher than the values gained from DSC. These results are very promising.

**Table 3: Thermal properties of KBF₄ in Al heat battery.**

| Specific Heat, 100 °C - 150°C (kJ/kgK) | Specific Heat, 150 °C - 250°C (kJ/kgK) | Specific Heat, 270 °C - 300°C (kJ/kgK) | Specific Heat, 280 °C - 290°C (kJ/kgK) | Specific Heat, 300 °C - 320°C (kJ/kgK) | Specific Heat, 310 °C - 325°C (kJ/kgK) | Specific Heat, 270 °C - 300°C (kJ/kgK) | Specific Heat, 280 °C - 290°C (kJ/kgK) |
|---|---|---|---|---|---|---|---|
| 1.89 | 2.26 | 6.35 | 11.19 | 3.12 | 3.09 | 128.31 | 91.17 |

### Alternative Design

The compatibility testing discussed earlier showed that aluminium is unsuitable for use with KBF₄ when heating above its melting point. This therefore eliminates the option to use an aluminium heat exchanger with molten KBF₄. This led to the creation of a new design heat store for KBF₄, as well as other high temperature PCM. This design featured a simple 'cappable' pipe which may, for example, be a cylinder with a fixable cap such as a screw-on cap. This would allow the heat store (i.e. the prototype heat store) to be easily scalable, in length and in diameter, which should simplify scale-up to shipping container size. The pipes containing the PCM material would act as the heat exchanger, allowing the heat transfer fluid - whether it be air, high temperature steam, or thermal oil - to flow through and around the pipes, bringing or extracting heat.

In order to melt KBF₄ and thereby increasing the bulk density, stainless steel was required for containment. Pipes with threaded ends, as well as threaded caps may be used.

One end of a pipe (5.5 × 25 cm) was fitted with the cap, which was tightly screwed and tested with water at room temperature to ensure a good seal. The prototype container was filled with 500 g of KBF₄ and placed in a glass liner within a tube furnace. A thermocouple was placed in the centre of the material, held in place by an alumina sheath. Firstly, the prototype was heated to 600°C, to ensure all the KBF₄ would melt. The container was then cycled repeatedly between 200 and 350°C for 25 cycles.

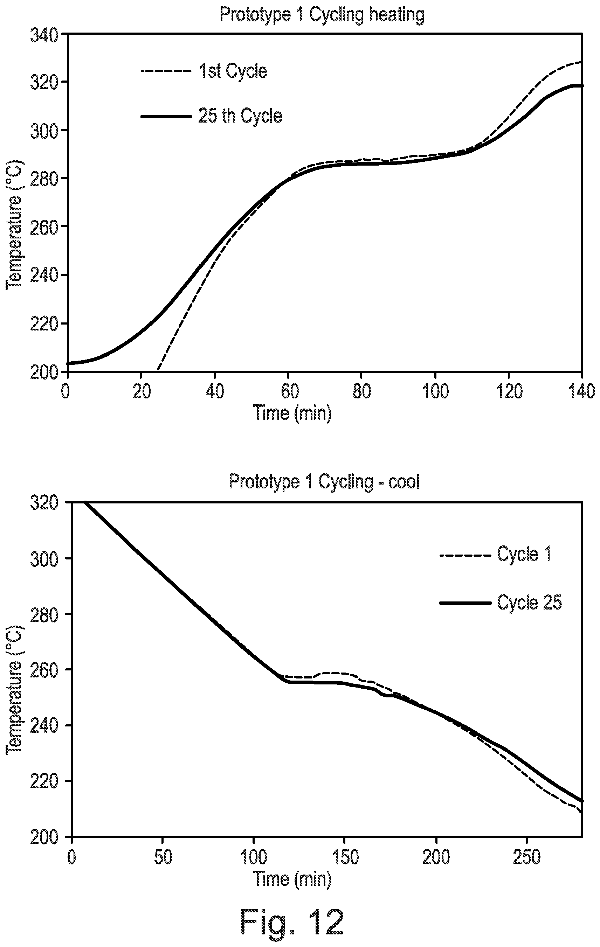

The cycling data showed good reproducibility over 25 cycles, as shown in Figure 12**Error**! **Reference source not found..**

The plateaux had not differed in length, the only discernible difference was in the gradient of the temperature curve; however, this was due to the temperature range being shortened.

### Pelletisation

An alternative method to increase the bulk density of tetrafluoroborate salts (e.g. KBF₄) for use as phase change materials is to use pressure to compact the powder into a solid pellet. Improving the bulk density without melting would enable the use of aluminium as a containment material.

To press powder tetrafluoroborate salts (e.g. KBF₄) any suitable means may be used and, for example, a die set and press may be used. The powder compacted reasonably, producing a hard, completely solid pellet. The pellet was then cycled ten times in a furnace up to 350 °C, after which there was clear signs of cracking on the pellet. This is expected due to the volume change between the two phases. The pellet had retained its shape, however, and had not crumbled back to a powder, therefore pelleting is a viable option to increase the bulk density.

The use of additives to increase the structural rigidity is also possible and within scope of the present invention.

A range of additives may be used including any one of or combination of the following: fiberglass, carbon fibre and graphite flakes. Other tetrafluoroborates and mixtures may also be used.

### Preparation of Tetrafluoroborates Salt Mixtures

Tetrafluoroborate salts were sourced from the suppliers, Fluorochem (99% KBF₄, 98% NaBF₄, 96% LiBF₄), Alfa Aesar (98% KBF₄, 97% NH₄ BF₄, 98% RbBF₄) and Sigma-Aldrich (97% NH₄BF₄). All salts with exception to NH₄BF₄ from Sigma-Aldrich were fine, fluid like powders; NH₄BF₄ was granular and required grinding before use.

Initial testing was carried out on 1:1 molar mixtures of the salts. Approximately 10 g of each salt mixture was prepared by weighing the appropriate mass of each salt and placed in a glass vial.

Mixing of the salts was carried out on the Resonant Acoustic Mixer (RAM) which operates by oscillating rapidly with a fixed acceleration, which causes displacement of the powder particles and ensures random mixing of the sample. The acceleration chosen for mixing the fine tetrafluoroborate powders was 80 G, and this was carried out for 15 minutes. Sufficient space was left in the vial to allow for movement of the powder. Grinding samples together using a pestle and mortar was also found to be a successful method in creating a uniform mixture.

### Thermal Cycling

Thermal cycling of the individual salts and their mixtures was carried out on the Torrey Pines Scientific Inc. Programmable Hot Plate HP60. A 10 g sample of salt or salt mixture was placed in a 20 cm⁻³ glass vial and cycled between 20°C and 350°C. Sample temperature was measured using K-type thermocouples held in place with aluminium foil or stainless steel vial caps and a Pico Technologies TC-08 Thermocouple Data Logger.

Thermal cycling is carried out at this scale as it allows larger material behaviour to be investigated such as sublimation, corrosion (of glass and metal), discolouration and changes in material consistency.

As multiple samples can be cycled at once, a large amount of data can be collected which can be fairly compared, as the same conditions have been experienced by all samples. Furthermore, as multiple cycles can be performed, changes in material behaviour can be tracked over time.

### Single Salt Analysis

It has been found that tetrafluoroborate salts according to the present invention can be mixed to form new materials with different phase change temperatures.

The tetrafluoroborate salts which have been analysed for use in mixtures are combinations of the following: KBF₄; NaBF₄; NH₄BF₄; LiBF₄ and RbBF₄.

### Thermal analysis

To understand the salts thermal behaviour, thermal cycling and DSC analysis was carried out.

### Thermal Cycling

Thermal cycling of 20 g samples was carried out for KBF₄ and NaBF₄ up to 350°C.

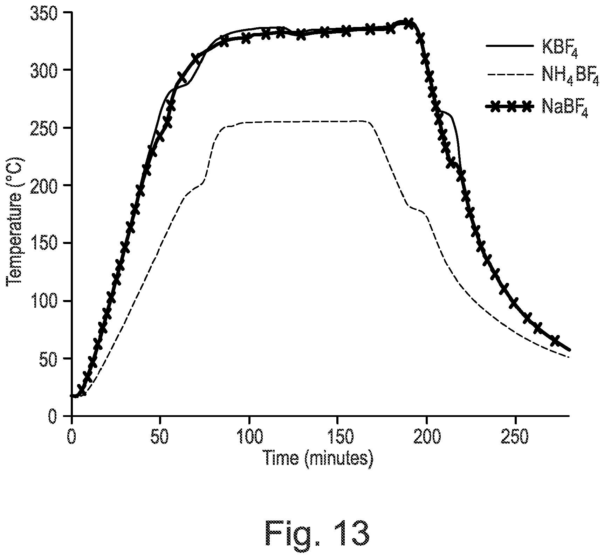

NH₄BF₄ is known to start to sublime at 220°C and therefore the sample was cycled to only 250°C. Data is shown in Figure 13.

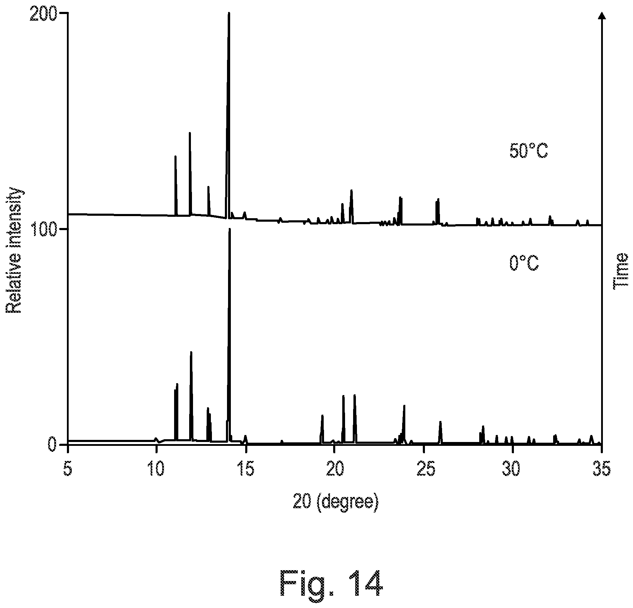

Figure 14 therefore shows the thermal cycling data for KBF₄ and NaBF₄ up to 350 °C and for NH₄BF₄ up to 250°C.

As expected, sublimation was observed for the sample during thermal cycling.

Sharp heating and cooling transitions were observed for KBF₄ at 284°C and 268°C respectively, with no change over subsequent cycles.

Slightly shorter plateaus were observed for NaBF₄ at 247°C and 216°C for the heating and cooling transitions. The shortening of the plateaus is most likely consequent of a lower energy transition than for KBF₄.

The NH₄BF₄ cycle shows clear heating and cooling plateaus at 196°C and 182°C, respectively. Comparing cooling and heating transition temperatures, lower cooling transition temperatures are observed for all salts, likely due to hysteresis or super-cooling of the sample.

### Thermal Properties Comparison

Thermal analysis was also carried out using a DSC with heating rate 10 K/min. A summary of the literature latent heat values and DSC values is shown in Table 4.

**Table 4: Table comparing the literature and DSC values of stored energy and cooling transition temperature for LiBF₄, NaBF₄, KBF₄, RbBF₄ and NH₄BF₄.**

| | **LiBF₄** | **NaBF₄** | **KBF₄** | **RbBF₄** | **NH₄ BF₄** |
|---|---|---|---|---|---|
| **Literature cooling transition temperature (°C)** | 27 | 222 | 274 | 249 | 200 |
| **DSC cooling transition temperature (°C)** | 26 | 205 | 248 | 222 | 182 |
| **Thermal cycling cooling transition temperature (°C)** | - | 216 | 268 | - | 182 |
| **Literature energy released (kJ/kg)** | - | 72.4 | 117.7 | - | 84.6 |
| **DSC energy released (kJ/kg)** | 7.0 | 55.3 | 110.2 | 70.4 | 98.5 |

Comparing the literature transition temperature values to the DSC and thermal cycling data, it can be observed that experimental data shows slightly lower temperatures, particularly for the DSC data. This is most likely due to super-cooling of the samples due to low sample volume. By comparing the literature values for energy released it can be observed that they are comparable, with exception to NaBF₄. This was attributed to poor data obtained within the literature text.

### Variable Temperature in-situ PXRD studies

The crystal structures for KBF₄ and NH₄BF₄ are characterised, with both the low temperature and high temperature crystal structures available. However, LiBF₄, NaBF₄ and RbBF₄ have published low temperature crystal structures, but no high temperature crystal structures. Hence, using PXRD data gathered at the Diamond Light Source, the high temperature crystal structures of these salts were determined.

### LiBF₄

The LiBF₄ structure for the low temperature structure was determined and a solid to solid transition was reported at 27°C. Therefore, LiBF₄ was cycled between 0°C and 50 °C (Figure **14Error! Reference source not found**.).

Figure 14 is a therefore a representation of thermal cycling for LiBF₄ cycled between 0°C and 50°C according to an embodiment of the present invention

During cycling there was no observable change in crystal structure.

Furthermore, as the transition observed on the DSC was very low energy (7.0 kJ/kg) in comparison to KBF₄ (110.2) it is likely the energy released does not represent a solid to solid transition but the dehydration of a contaminant LiBF₄ hydrate or the transition of an impurity.

### NaBF₄

The low temperature crystal structure of NaBF₄ has already been determined.

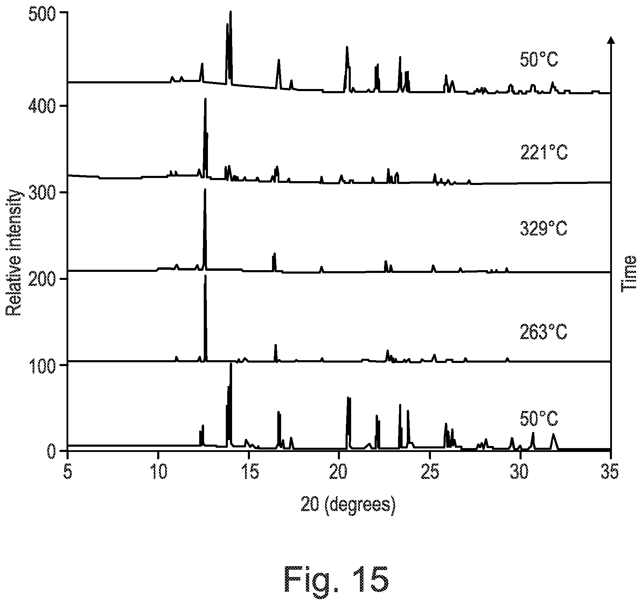

Figure 15 shows powder patterns for NaBF₄ cycled between 50°C and 350°C.

### RbBF₄

To obtain high temperature data, the RbBF₄ salt was cycled between 20°C and 300°C and powder patterns collected for the transition of the salt.

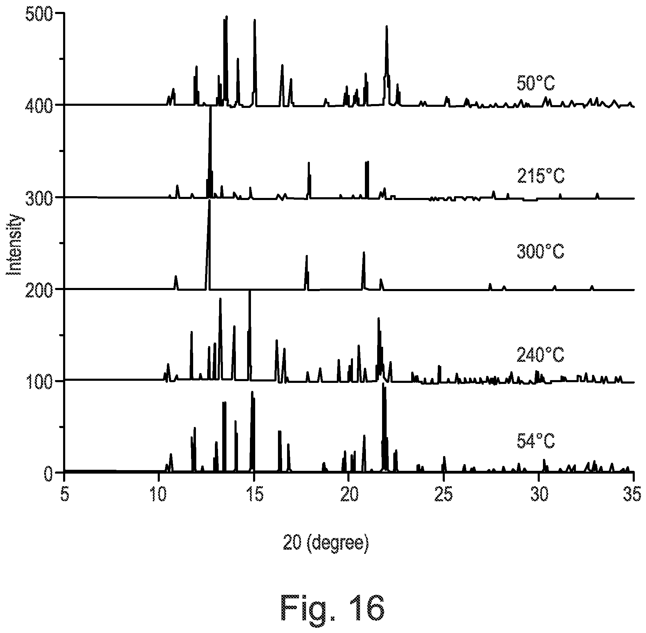

Figure 16 is therefore a representation of the RbBF₄ salt which was cycled between 20°C and 300°C and powder patterns collected for the transition of the salt.

RbBF₄ was confirmed to be isostructural with KBF₄ and NH₄BF₄.

### Conclusions

As the potassium salt has the highest latent heat, potassium tetrafluoroborate salts have some advantages.

**Table 5: Table comparing transition temperatures, energy released, low temperature phase and high temperature phase data for the salts LiBF₄, NaBF₄, KBF₄, RbBF₄ and NH₄BF₄.**

| **Percent** | **LiBF₄** | **NaBF₄** | **KBF₄** | **RbBF₄** | **NH₄BF₄** |
|---|---|---|---|---|---|
| **Transition temperature (cooling) (°C)** | - | 205.1 | 247.8 | 221.6 | 182.2 |
| **Energy released (kJ/kg)** | - | 55.34 | 110.19 | 70.44 | 98.45 |

### Salt Mixtures

A number of tests were conducted on KBF₄ due to the salt's high latent heat in comparison with the other tetrafluoroborate salts.

LiBF₄, NaBF₄ and NH₄BF₄ were chosen as the composite salts to be mixed with KBF₄ as they are readily available and have varying physical properties such as transition temperature and crystal structure, also since they also have BF₄ groups, it was thought they may contribute to the phase change energy more than a salt without a solid-solid phase change. However, it is also possible to change the solid to solid transition point by adding an additive that does not contain the tetrafluoroborate molecule.

The selection rule for doing so is: addition of a (or multiple) salts that has a common cation with the parent tetrafluoroborate salt. As a non-limiting set of examples, the following may be used:
addition of NaCl to NaBF₄,
addition of KNO₃ to KBF₄,
addition of SrSO₄ to Sr(BF₄)₂.

This is because it is undesirable to have more than three ions in a system as there then exists an enhanced likelihood of undesired by-products forming.

Addition of K₃PO₄ to Mg(BF₄)₂, could result in formation of Mg₂(PO₄)₂ (along with KBF₄, and the two starting compounds). Thus, having both more than or equal to two cations and more than or equal to two anions is undesired.

It was investigated how these factors affect the success of forming a new solid-solid material, such as LiBF₄ and KBF₄ salt mixture.

Initial analysis was carried out on 20 g samples of 50 mol% and 25 mol% LiBF₄ mixtures. In the 25 mol% mixture, 25% of the molecules were LiBF₄ and 75% were KBF₄, and in the 50 mol% mixture 50% of the molecules were LiBF₄ and 50% were KBF₄. LiBF₄ was found to have no solid to solid transition outside their tested temperature range, however undergoes a melting transition at 296.5°C.

### Thermal Analysis

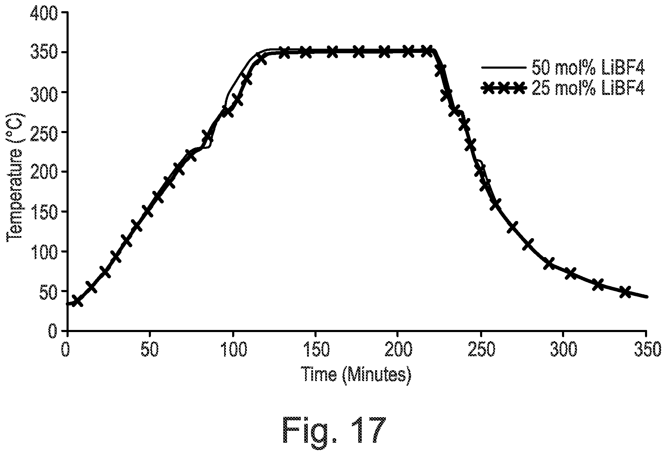

The salt mixtures were cycled on the hotplate, the data collected is shown in Figure 17. For both compositions, two transitions were observed during heating; 274°C and 227°C. Both temperatures were lower than the transition temperature for the pure salts as LiBF₄ melts at 296.5°C and KBF₄ transitions at 283°C. It is likely that the presence of two salts causes mutual depression of their transition temperatures.

Figure 17 therefore shows thermal cycling of LiBF₄ and KBF₄ between room temperature and 350°C containing 25 mol% and 50 mol% LiBF₄.

However, slight differences in plateau length can be observed between the compositions due to variations in LiBF₄ content. It is therefore most likely that the transition temperature of 227°C corresponds to the LiBF₄ transition, as a shorter melt plateau is observed for the sample with a lower LiBF₄ content.

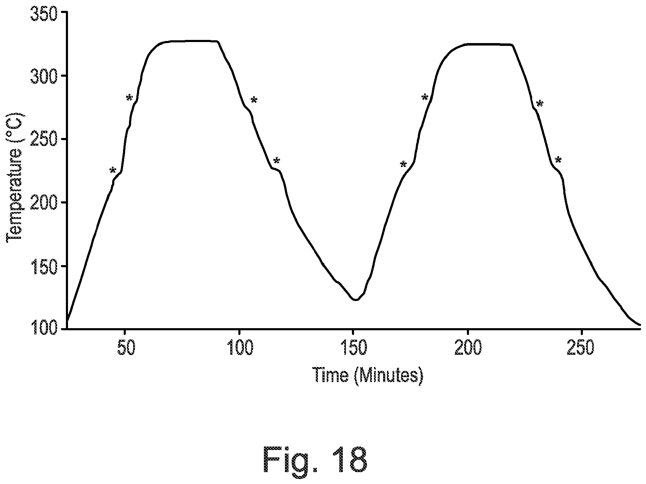

The 50 mol% sample was cycled multiple times to observe if any changes in material behaviour were observe. This is shown in Figure 18.

Figure 18 therefore shows the thermal cycling of 50 mol% LiBF₄ and KBF₄ mixture cycled up to 350°C.

Between cycles of the 50 mol% mixture, no difference can be observed. As a new transition temperature is expected for a homogenous mixture, it is possible that the salts are behaving separately.

### Variable Temperature In-Situ PXRD Studies

PXRD was carried out on the 50 mol% mixture of LiBF₄ and KBF₄.

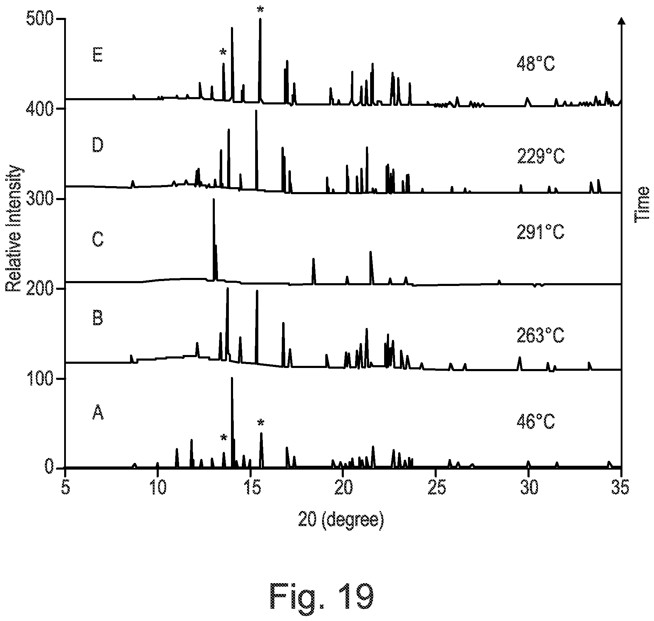

The powder patterns for the full transition are shown in Figure 19 which shows the normalised variable temperature powder patterns for LiBF₄ and KBF₄.

Comparing the peaks in the low temperature patterns A and E at 13.5° and 15.5° (marked with asterisk), a change in peak intensity is observed due to preferred orientation. This is most likely due to the crystallization of the LiBF₄ within the capillary during cooling, removing the random orientation of crystals within the sample. There is also a decrease in peak intensity after cycling as shown in **Error! Reference source not found.** suggesting there is a degradation or melt of one of the mixture components.

Figure 19 shows the normalised variable temperature powder patterns for LiBF₄ and KBF₄ mixture for: A - low temperature before cycling; B - mid heating transition; C - high temperature phase; D - mid cooling transition; and E - low temperature phase after transition.

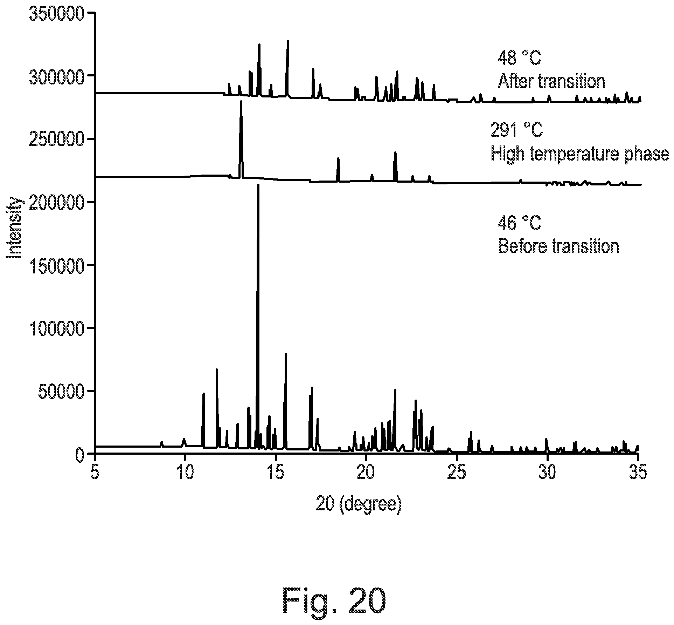

Figure 20 shows the normalised variable temperature powder patterns for LiBF₄ and KBF₄ mixture for: A - low temperature before cycling; B- mid heating transition; C- high temperature phase; D mid cooling transition; and E - low temperature phase after transition.

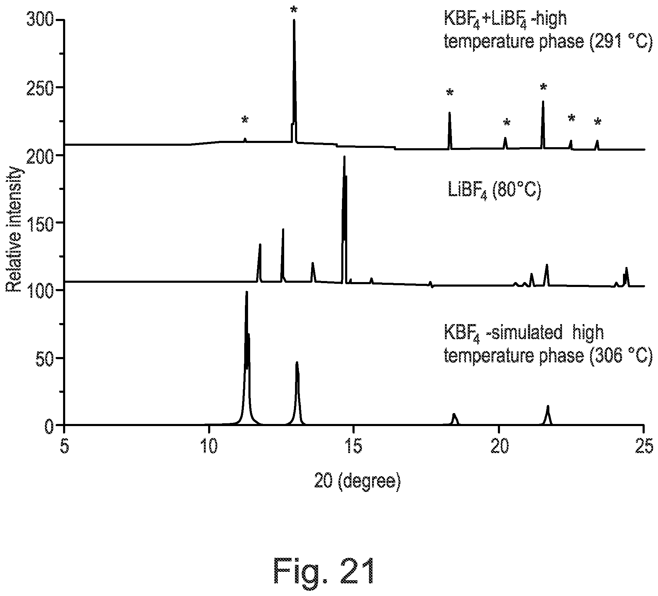

Figure 21 shows powder patterns in 5° - 25° range comparing KBF₄ simulated data (306°C) and LiBF₄ (80°C) data with LiBF₄ and KBF₄ (291°C).

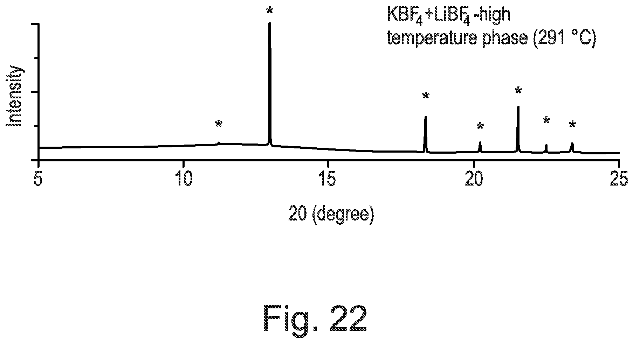

The phase transition was observed on heating to 291°C, shown in powder pattern in Figures 21 and 22. However, comparing the high temperature powder pattern with the pure KBF₄ high temperature phase (Figure 21) intensity changes are observed for the highlighted peaks due to preferred orientation.

Low intensity peaks at 20.19°, 22.47°, and 23.36° are most likely due to a small amount of LiBF₄ present, however due to temperature differences and consequent shifting, the peaks were unable to be matched precisely. However, as no clear new peaks were observed it is probable the LiBF₄ and KBF₄ salts are only acting as a mixture with no new crystal phase or transition temperature.

### NaBF₄ and KBF₄ Salt Mixture

### Analysis was conducted on 25 mol% and 50 mol% NaBF₄ mixtures with KBF₄ which were mixed on the RAM.

### Thermal Analysis

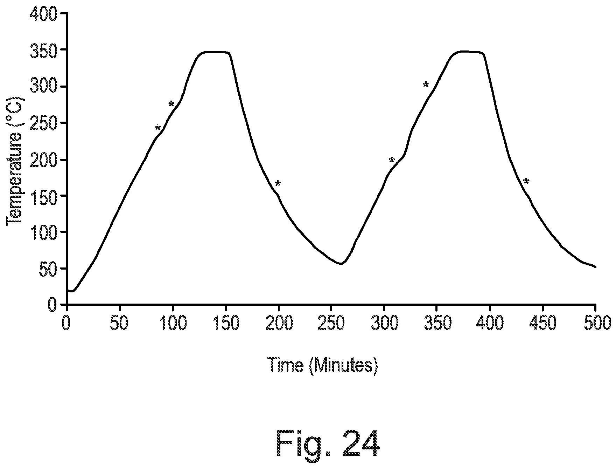

The 25 mol% and 50 mol% NaBF₄ mixtures were cycled up to 350°C as shown in Figure 24.

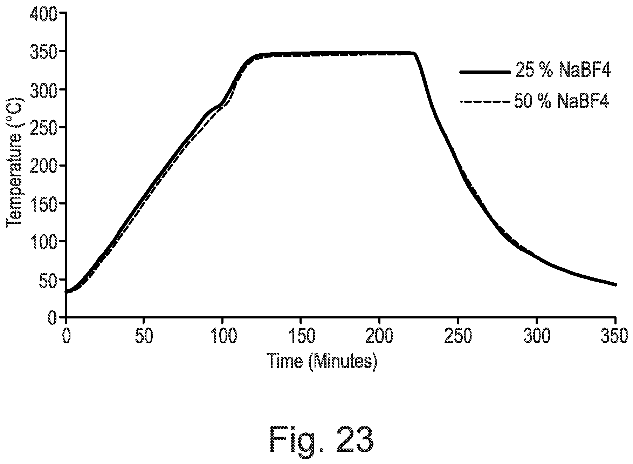

Figure 23 therefore represents thermal cycling of NaBF₄ and KBF₄ mixtures between room temperature and 350°C, containing 25 mol% and 50 mol% LiBF₄.

Clear transitions can be observed during heating, with the transition at 238°C corresponding to NaBF₄ and 277°C to the KBF₄ single solid to solid transitions. The single sodium salt transition appears diminished in the 25 mol% sample due to lower salt content than the 50 mol% sample.

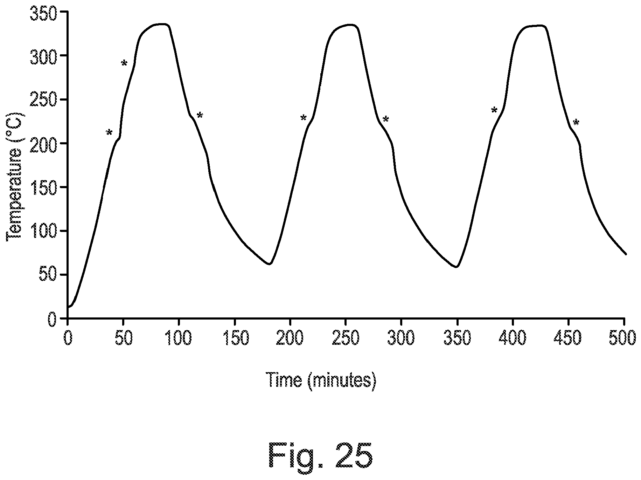

During cooling, transitions are much less clear with only slight events observed at 261°C and 180 °C. To investigate if any changes occurred through further cycling, the 50 mol%, which displayed clearer transitions, was cycled multiple times. This is shown in Figure 25 which is a representation of thermal cycling of 50 mol% NaBF₄ and KBF₄ mixture up to 350°C.

A change in the transition temperature can be observed between cycles, as a new event occurs at 187°C. The appearance of this new transition is important as it suggests the salts are transitioning simultaneously.

### NH₄ BF₄ and KBF₄ Salt Mixture

The mixture of NH₄BF₄ with KBF₄ was also chosen, in contrast to the previous salt mixtures only a 50 mol% was cycled as this composition showed the clearest transitions. A 20 g sample was prepared and mixed on the RAM.

### Thermal Analysis

The 50 mol% sample was cycled up to 350°C for multiple cycles to determine whether changes in material behaviour occurred over time. This is shown in Figure 25.

Figure 25 is therefore a representation of thermal cycling of 50 mol% mix of NH₄BF₄ and KBF₄ cycled between 50°C and 350°C.

During the first heating cycle, two transitions are observed: 199°C corresponding to the ammonium salt and 280°C to the potassium salt.

However, during the second heating cycle only one transition at 217°C is observed. Furthermore, the cooling transitions appear to occur over a narrower temperature range for subsequent cycles.

This change in behaviour suggests the formation of a eutectic mixture as the salts are transitioning simultaneously at a new phase transition temperature. Multiple cycles are therefore needed to form a new phase transition temperature and achieve phase mixing, where the salts act as a homogenous system and transition simultaneously. During cycling it was found that sublimation of the sample occurred which was identified as the ammonium salt; hence the composition of the sample will have changed during cycling.

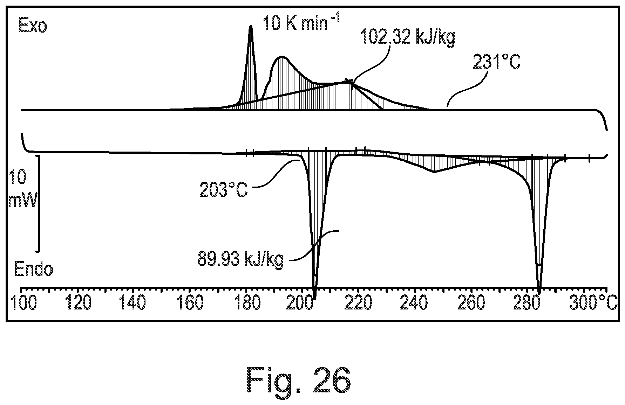

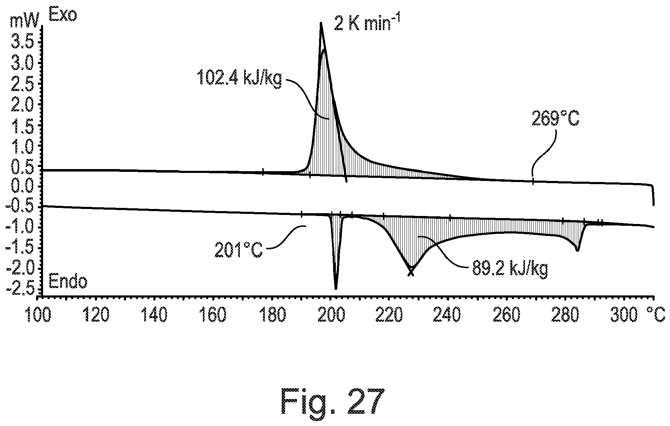

Further analysis was carried out on DSC as shown in Figure 26 and Figure 27 for the first and third cycle respectively.

Figure 26 is a DSC representation of uncycled 50 mol% NH₄BF₄ and KBF₄ cycled between ambient and 300°C at a rate of 10°C min⁻¹.

Figure 27 is a DSC representation of third cycle of 50 mol% NH₄BF₄ and KBF₄ cycled between ambient and 300°C at a rate of 2°C min⁻¹.

Through comparison of the first cycle Figure 26 and third cycle Figure 27 it is clear that a new broad endothermic transition has emerged at about 228°C.

Furthermore, there is a change from a broad multiple exothermic peak transition to a broad single peak. This data supports the vial scale thermal cycling data as the emergence of new peaks is indicative of the formation of a eutectic mixture. Comparing the stored energy of the system to KBF₄ (113 kJ/kg) it can be seen that there is a decrease in stored energy.

### Variable Temperature In-Situ PXRD Studies

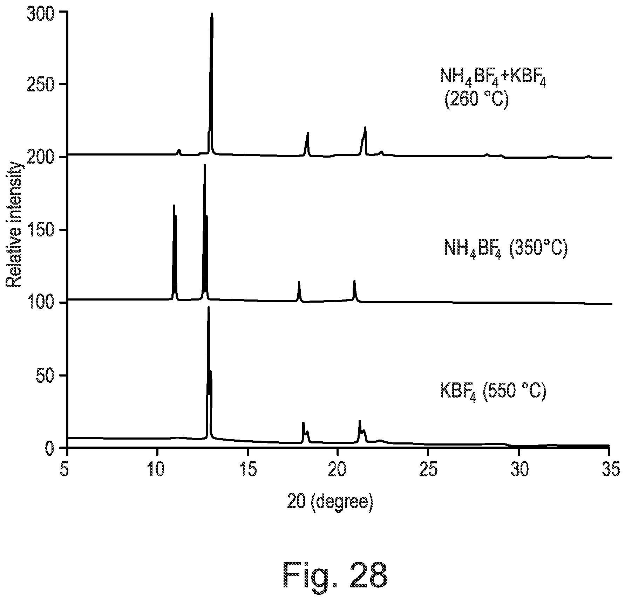

To confirm if the salt mixture had formed a new crystal phase, variable temperature PXRD was carried out. Analysis was carried out on a 50 mol% pre-cycled mixture of NH₄BF₄ and KBF₄ to ensure the material was transitioning at the new observed transition temperature. However, during cycling, NH₄BF₄ sublimated, therefore composition is uncertain. The powder patterns obtained for a full cycle are shown in Figure 28.

Figure 28 is therefore a representation of powder patterns for the collected high temperature phases for KBF₄, NH₄BF₄ and their mixture.

It is clear that both salts transitioned fully into a new high temperature phase. The low temperature phase before transition has broad and undefined peaks notably in the 15°C - 25°C range. However, after a heating cycle, the peaks appear to have sharpened.

From Figure 28 it can be seen that there appears to be no peak overlap of the individual salt phases and therefore, no evidence of the separate salt phases in the high temperature mixture.

### Phase diagram construction

To determine if a eutectic composition of the NH₄BF₄ and KBF₄ mixture exists, thermal cycling of 15 g samples of 10 - 90 mol% NH₄BF₄ mixture for 5 cycles. Heating transition temperatures were then used to construct a phase diagram.

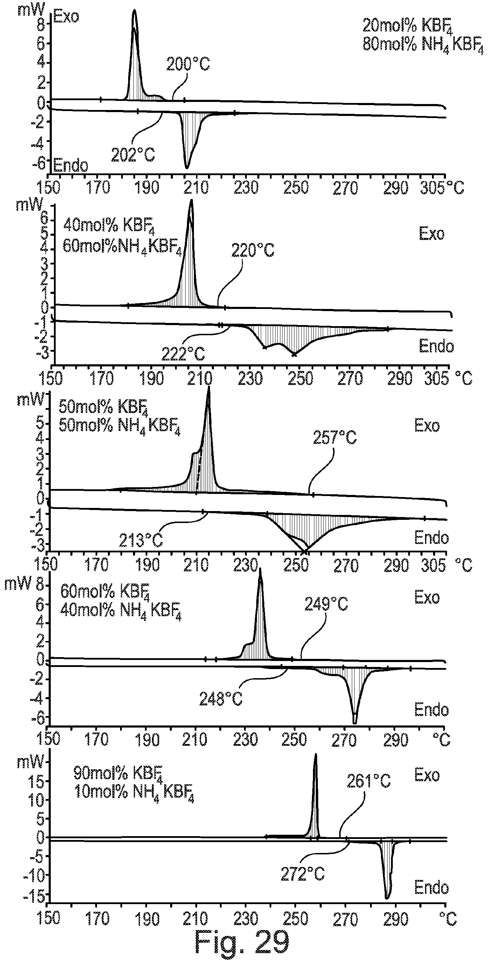

Due to a local minima at around 50 mol% NH₄BF₄ indicating the possible presence of a eutectic composition, therefore more data was collected for 2 mol% increments between 40 and 60 mol% NH₄BF₄, to increase data points in this area. DSC of the pre-cycled mixture was also carried out; data for a range of sample is shown in Figure 29.

Figure 29 is therefore a comparison of DSC data collected for varying compositions of NH₄BF₄ and KBF₄ mixture.

From the DSC data, it can be seen with mixtures dominant in one salt such as 90 mol% KBF₄, the transitions are sharp corresponding to the transition of the dominant salt. However, for compositions with a higher salt ratio for example 60 mol% KBF₄ a shoulder peak can be observed in both the endothermic and exothermic transitions indicating merging of the peaks for each salt. This indicates the approach to a eutectic composition.

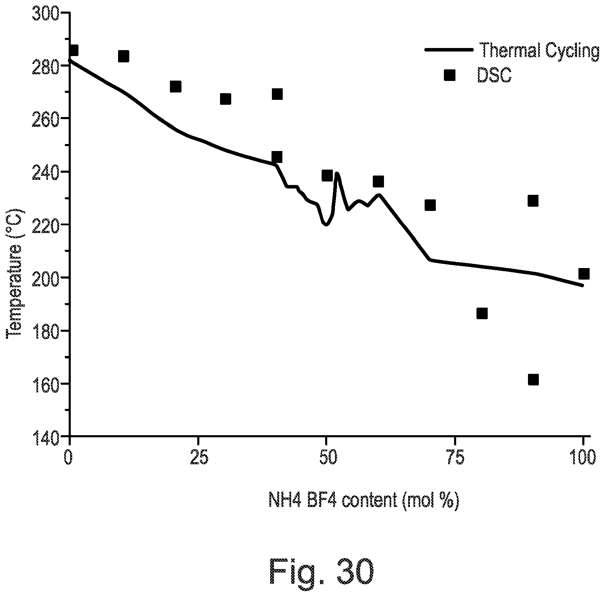

Using the data collected from DSC and thermal cycling a phase diagram was constructed. This is shown in Figure 30.

Figure 30 is therefore a phase diagram constructed using DSC data and thermal cycling data. The 40 and 90 mol% compositions have two data points as two transitions were observed in DSC data.

From the phase diagram an overall decrease in transition temperature can be seen for both DSC and thermal cycling data. Suggestion of local minima in thermal cycling data was observed for compositions 50 mol% and 70 mol% and for 80 mol% and possibly 90 mol% in the DSC data.

However, composition of the mixtures is only approximate as the NH₄BF₄ salt was found to sublimate during cycling.

### Conclusions

The analysis of the thermal and crystallographic data of the tetrafluoroborate salt mixtures it has clearly shown that tetrafluoroborate salt mixtures have very useful properties due to the solid to solid phase change temperatures.

Tetrafluoroborate salts, LiBF₄, NaBF₄, KBF₄, RbBF₄ and NH₄BF₄ were successfully characterised through the use of thermal cycling, DSC and variable temperature PXRD. The materials were found to have transition temperatures ranging approximately 182°C - 248°C with stored energy of 50 - 110 kJ/kg.

The NH₄BF₄ and KBF₄ mixture was found to be very successful as a new transition temperature of about 217°C was observed. Therefore, in order to determine if a eutectic composition exists, phase diagram construction was attempted for this mixture, showing a general trend of decreasing transition temperature with increasing NH₄BF₄ content.

The identification of solid to solid PCMs is beneficial to PCM applications as they are much easier to implement than solid to liquid PCMs for high temperature applications, benefitting from low expansion during phase change and easier encapsulation. Furthermore, the identification of mixtures offers flexibility in phase change temperatures increasing range of suitable applications for solid-solid materials.

It will be clear to those of skill in the art, that the above described embodiments of the present invention are merely exemplary and that various modifications and improvements thereto may be made without departing from the scope of the present invention. For example, any suitable range and concentrations of tetrafluoroborate salts and components described above may be used.

## Claims

1. A heat battery comprising a thermal storage material in the form of a phase change material (PCM), said PCM comprising:
at least one or a plurality of tetrafluoroborate salts which has a solid to solid (polymorphic) transition;
wherein the PCM has a solid-to-solid phase change in the region of about -270°C to about 3,000°C temperature range;
the PCM comprises tetrafluoroborate anions (BF₄⁻) which is part of an organic salt, inorganic salt and/or metal salt with the proviso that the PCM comprises no nucleating agent;
the PCM comprising tetrafluoroborate anions (BF₄⁻) has increased bulk density and is in a pressed (i.e. compacted) or melt cast form; and
wherein the PCM is capable of being repeatedly thermally cycled without any significant degradation to the PCM material.

2. A heat battery according to claim 1, wherein the at least one or plurality of tetrafluoroborate salts are capable of at least one, two or more, three or more or a plurality of solid-to-solid phase transitions which occur at different temperatures; and optionally
wherein the solid-to-solid transition point temperature is capable of being changed under pressure.

3. A heat battery according to any preceding claim, wherein the tetrafluoroborate salts is or comprises KBF₄ in the following amounts: 10 - 100 wt.%.; 20 - 100 wt.%.; 30 - 100 wt.%; 40 - 60 wt.%; 50 - 100 wt.%; 50 - 90 wt.%; 60 - 90 wt.%; 70 - 90 wt.%; about 100 wt.%; or
wherein the tetrafluoroborate salt comprises a mixture of tetrafluoroborate salts of KBF₄ and NH₄BF₄ in a ratio of: about 10 - 90 mol% of KBF₄ and 10 - 90 mol % of NH₄BF₄; about 20 - 80 mol% of KBF₄ and 20 - 80 mol % of NH₄BF₄; about 30 - 60 mol% of KBF₄ and 30 - 60 mol % of NH₄BF₄; about 20 mol% KBF₄ and 80 mol% NH₄BF₄; about 40 mol% KBF₄ and 60 mol% NH₄BF₄; about 50 mol% KBF₄ and 50 mol% NH₄BF₄; about 60 mol% KBF₄ and 40 mol% NH₄BF₄; or about 90 mol% KBF₄ and 10 mol% NH₄BF₄.

4. A heat battery according to any preceding claim, wherein the phase change materials (PCMs) is capable of being repeatedly thermally cycled up to: 50 thermal cycles; 70 thermal cycles; 100 thermal cycles; 200 thermal cycles; 500 thermal cycles; 1,000 thermal cycles; 5,000 thermal cycles; and 10,000 thermal cycles.

5. A heat battery according to any preceding claim, wherein the phase change material (PCM) is in a pressed (i.e. compacted) form such as a pressed pellet.

6. A heat battery according to any preceding claim, wherein the at least one or the plurality of tetrafluoroborate salts is selected from any one of or any combination of the following tetrafluoroborate salts:
a. Lithium (Li) tetrafluoroborate salts;
b. Sodium (Na) tetrafluoroborate salts;
c. Potassium (K) tetrafluoroborate salts;
d. Rubidium (Rb) tetrafluoroborate salts;
e. Caesium (Cs) tetrafluoroborate salts;
f. Magnesium (Mg) tetrafluoroborate salts;
g. Calcium (Ca) tetrafluoroborate salts;
h. Strontium (Sr) tetrafluoroborate salts;
i. Barium (Ba) tetrafluoroborate salts;
j. Iron (Fe) tetrafluoroborate salts;
k. Manganese (Mn) tetrafluoroborate salts;
l. Zinc (Zn) tetrafluoroborate salts;
m. Zirconium (Zr) tetrafluoroborate salts;
n. Titanium (Ti) tetrafluoroborate salts;
o. Cobalt (Co) tetrafluoroborate salts;
p. Aluminium (Al) tetrafluoroborate salts;
q. Copper (Cu) tetrafluoroborate salts;
r. Nickel (Ni) tetrafluoroborate salts.

7. A heat battery according to any preceding claim, wherein the PCM has a solid-to-solid phase change in the region of: about -50°C to about 1,500°C; about 0°C to about 1,000°C; or about 0°C to about 500°C: about -50°C to about 1,500°C; about -50°C to about 500°C; about 0°C to about 1,000°C; about 0°C to about 500°C; about 0°C to about 400°C; about 0°C to about 300°C; about 0°C to about 200°C; about 0°C to about 100°C; about 100°C - 400°C; about 150°C - 300°C; 200°C - 300°C; about 260°C - 290°C; or about 270°C - 280°C.

8. A heat battery according to any preceding claim, wherein the phase change material (PCM) comprises a solid-to-solid transition material which provides a PCM active over a wide temperature range over any of the following temperature range of: about 0°C - 50°C; about 20°C - 30°C; about 100°C - 200°C; or about 135°C - 155°C.

9. A heat battery according to any preceding claim, wherein the phase change material (PCM) is air and moisture stable in the atmosphere and will be stable under any desired formed shape.

10. A heat battery according to any preceding claim, wherein the phase change materials (PCM) comprise any one of or combination of the following salts: LiBF₄, NaBF₄, KBF₄, RbBF₄, CsBF₄ and NH₄BF₄ or
wherein the phase change materials (PCM) comprise a cation selected from any one of or combination of the following:
a metal cation, such as Li+, Na+, K+, Cs+, Rb+, Mg2+, Sr2+, Fe2+, Fe3+, Pt+, AI3+, Ag+,:
an inorganic cation, such as NH4+, NO2+, NH2-NH3+ (Hydrazinium); or
an organic cation, such as 1-Ethyl-3-methylimidazolium.

11. A heat battery according to any preceding claim, wherein the phase change material (PCM) forms a thermal storage medium which comprises a number of other components and/or additives that act as:
a. Thermal conductivity enhancers
b. Shape stabilising
c. Processing aids.

12. A heat battery according to any preceding claim, wherein the phase change material (PCM) comprises at least one of or a combination of any of the following non-limiting list of inorganic tetrafluoroborate salts:
potassium tetrafluoroborate (KBF₄);
NaBF4;
NH₄BF₄;
LiBF₄;
Sr(BF₄)₂;
Ca(BF₄)₂;
NH₄H(BF₄)₂;
(NH₄)₃H(BF₄)₄;
Ba(BF₄)₂;
Cr(BF₄)₂;
Pb(BF₄)₂;
Mg(BF₄)₂;
AgBF₄;
RbBF₄;
CsBF₄;
Zn(BF₄)₂;
Fe(BF₄)₂;
Fe(BF₄)₃;
Ni(BF₄)₂;
Ni(BF₄)₃;
Mn(BF₄)₂;
Co(BF₄)₂; and
Zn(BF₄)₂.

13. A heat battery according to any preceding claim, wherein the tetrafluoroborate salt is a hydrate, or another solvate; or any one of or combination of the following: magnesium tetrafluoroborate hexahydrate ([Mg(H2O)6](BF₄)2); iron tetrafluoroborate hexahydrate; the cobalt tetrafluoroborate hexahydrate; and zinc tetrafluoroborate hexahydrate.

14. A heat battery according to any preceding claim, wherein different tetrafluoroborates salts are mixed together and/or with other components (e.g. sodium chloride) to depress the melting point of the phase change material (PCM).

15. Use of a solid-to-solid phase change material (PCM) according to any preceding claim in transportation, automotive and barocaloric applications.

## Patentansprüche

1. Wärmebatterie, die ein Wärmespeichermaterial in Form eines Phasenwechselmaterials (PCM) umfasst, wobei das PCM Folgendes umfasst:
mindestens ein oder eine Vielzahl von Tetrafluoroboratsalzen, das/die einen Fest-zu-Fest-Übergang (polymorphen Übergang) aufweist;
wobei das PCM einen Fest-zu-Fest-Phasenwechsel in der Region eines Temperaturbereichs von etwa -270 °C bis etwa 3.000 °C aufweist;
wobei das PCM Tetrafluoroboratanionen (BF₄⁻) umfasst, die Teile eines organischen Salzes, anorganischen Salzes und/oder Metallsalzes sind mit der Maßgabe, dass das PCM keinen Keimbildner umfasst;
wobei das PCM, das Tetrafluoroboratanionen (BF₄⁻) umfasst, eine erhöhte Schüttdichte aufweist und in einer gepressten (d. h. verdichteten) oder schmelzgegossenen Form vorliegt; und
wobei das PCM dazu in der Lage ist, ohne signifikanten Abbau des PCM-Materials wiederholt Wärmezyklen unterzogen zu werden.

2. Wärmebatterie nach Anspruch 1, wobei das mindestens eine oder die Vielzahl von Tetrafluoroboratsalzen zu mindestens einem, zwei oder mehr, drei oder mehr oder einer Vielzahl von Fest-zu-Fest-Phasenübergängen in der Lage ist, die bei unterschiedlichen Temperaturen auftreten; und optional
wobei die Fest-zu-Fest-Übergangspunkttemperatur dazu in der Lage ist, unter Druck geändert zu werden.

3. Wärmebatterie nach einem vorhergehenden Anspruch, wobei die Tetrafluoroboratsalze KBF₄ in den folgenden Mengen sind oder umfassen: 10-100 Gew.-%; 20-100 Gew.-%; 30-100 Gew.-%; 40-60 Gew.-%; 50-100 Gew.-%; 50-90 Gew.-%; 60-90 Gew.-%; 70-90 Gew.-%; etwa 100 Gew.-%; oder
wobei das Tetrafluoroboratsalz ein Gemisch aus Tetrafluoroboratsalzen von KBF₄ und NH₄BF₄ in einem folgenden Verhältnis umfasst: etwa 10-90 Mol-% KBF₄ und 10-90 Mol-% NH₄BF₄; etwa 20-80 Mol-% KBF₄ und 20-80 Mol-% NH₄BF₄; etwa 30-60 Mol-% KBF₄ und 30-60 Mol-% NH₄BF₄; etwa 20 Mol-% KBF₄ und 80 Mol-% NH₄BF₄; etwa 40 Mol-% KBF₄ und 60 Mol-% NH₄BF₄; etwa 50 Mol-% KBF₄ und 50 Mol-% NH₄BF₄; etwa 60 Mol-% KBF₄ und 40 Mol-% NH₄BF₄; oder etwa 90 Mol-% KBF₄ und 10 Mol-% NH₄BF₄.

4. Wärmebatterie nach einem vorhergehenden Anspruch, wobei die Phasenwechselmaterialien (PCM) dazu in der Lage sind, wiederholt Wärmezyklen unterzogen zu werden bis zu: 50 Wärmezyklen; 70 Wärmezyklen; 100 Wärmezyklen; 200 Wärmezyklen; 500 Wärmezyklen; 1.000 Wärmezyklen; 5.000 Wärmezyklen; und 10.000 Wärmezyklen.

5. Wärmebatterie nach einem vorhergehenden Anspruch, wobei das Phasenwechselmaterial (PCM) in einer gepressten (d. h. verdichteten) Form wie etwa einem gepressten Pellet vorliegt.

6. Wärmebatterie nach einem vorhergehenden Anspruch, wobei das mindestens eine oder die Vielzahl von Tetrafluoroboratsalzen aus einem beliebigen oder einer beliebigen Kombination der folgenden Tetrafluoroboratsalze ausgewählt ist:
a. Lithium(Li)-Tetrafluoroboratsalzen;
b. Natrium(Na)-Tetrafluoroboratsalzen;
c. Kalium(K)-Tetrafluoroboratsalzen;
d. Rubidium(Rb)-Tetrafluoroboratsalzen;
e. Caesium(Cs)-Tetrafluoroboratsalzen;
f. Magnesium(Mg)-Tetrafluoroboratsalzen;
g. Calcium(Ca)-Tetrafluoroboratsalzen;
h. Strontium(Sr)-Tetrafluoroboratsalzen;
i. Barium(Ba)-Tetrafluoroboratsalzen;
j. Eisen(Fe)-Tetrafluoroboratsalzen;
k. Mangan(Mn)-Tetrafluoroboratsalzen;
l. Zink(Zn)-Tetrafluoroboratsalzen;
m. Zirconium(Zr)-Tetrafluoroboratsalzen;
n. Titan(Ti)-Tetrafluoroboratsalzen;
o. Cobalt(Co)-Tetrafluoroboratsalzen;
p. Aluminium(Al)-Tetrafluoroboratsalzen;
q. Kupfer(Cu)-Tetrafluoroboratsalzen;
r. Nickel(Ni)-Tetrafluoroboratsalzen.

7. Wärmebatterie nach einem vorhergehenden Anspruch, wobei das PCM einen Fest-zu-Fest-Phasenwechsel in der folgenden Region aufweist: etwa -50 °C bis etwa 1.500 °C; etwa 0 °C bis etwa 1.000 °C; oder etwa 0 °C bis etwa 500 °C: etwa -50 °C bis etwa 1.500 °C; etwa -50 °C bis etwa 500 °C; etwa 0 °C bis etwa 1.000 °C; etwa 0 °C bis etwa 500 °C; etwa 0 °C bis etwa 400 °C; etwa 0 °C bis etwa 300 °C; etwa 0 °C bis etwa 200 °C; etwa 0 °C bis etwa 100 °C; etwa 100 °C - 400 °C; etwa 150 °C - 300 °C; 200 °C - 300 °C; etwa 260 °C - 290 °C; oder etwa 270 °C - 280 °C.

8. Wärmebatterie nach einem vorhergehenden Anspruch, wobei das Phasenwechselmaterial (PCM) ein Fest-zu-Fest-Übergangsmaterial umfasst, das ein PCM bereitstellt, das über einen breiten Temperaturbereich über einen beliebigen der folgenden Temperaturbereiche aktiv ist: etwa 0 °C-50 °C; etwa 20 °C-30 °C; etwa 100 °C - 200 °C; oder etwa 135 °C - 155 °C.

9. Wärmebatterie nach einem vorhergehenden Anspruch, wobei das Phasenwechselmaterial (PCM) in der Atmosphäre luft- und feuchtestabil ist und unter einer beliebigen gewünschten geformten Form stabil sein wird.

10. Wärmebatterie nach einem vorhergehenden Anspruch, wobei die Phasenwechselmaterialien (PCM) ein beliebiges oder eine Kombination der folgenden Salze umfassen: LiBF₄, NaBF₄, KBF₄, RbBF₄, CsBF₄ und NH₄BF₄ oder
wobei die Phasenwechselmaterialien (PCM) ein Kation umfassen, ausgewählt aus einem beliebigen oder einer Kombination der Folgenden:
einem Metallkation, wie etwa Li+, Na+, K+, Cs+, Rb+, Mg2+, Sr2+, Fe2+, Fe3+, Pt+, Al3+, Ag+;
einem anorganischen Kation, wie etwa NH4+, NO2+, NH2-NH3+ (Hydrazinium); oder
einem organischen Kation, wie etwa 1-Ethyl-3-methylimidazolium.

11. Wärmebatterie nach einem vorhergehenden Anspruch, wobei das Phasenwechselmaterial (PCM) ein Wärmespeichermedium bildet, das eine Anzahl anderer Komponenten und/oder Zusatzstoffe umfasst, die als Folgendes wirken:
a. Wärmeleitfähigkeitsverstärker
b. Formstabilisierend
c. Verarbeitungshilfsmittel.

12. Wärmebatterie nach einem vorhergehenden Anspruch, wobei das Phasenwechselmaterial (PCM) mindestens eines oder eine Kombination von beliebigen der folgenden nicht einschränkenden Listen von anorganischen Tetrafluoroboratsalzen umfasst:
Kaliumtetrafluoroborat (KBF₄);
NaBF₄;
NH₄BF₄;
LiBF₄;
Sr(BF₄)₂;
Ca(BF₄)₂;
NH₄H(BF₄)₂;
(NH₄)₃H(BF₄)₄;
Ba(BF₄)₂;
Cr(BF₄)₂;
Pb(BF₄)₂;
Mg(BF₄)₂;
AgBF₄;
RbBF₄;
CsBF₄;
Zn(BF₄)₂;
Fe(BF₄)₂;
Fe(BF₄)₃;
Ni(BF₄)₂;
Ni(BF₄)₃;
Mn(BF₄)₂;
Co(BF₄)₂; und
Zn(BF₄)₂.

13. Wärmebatterie nach einem vorhergehenden Anspruch, wobei das Tetrafluoroboratsalz ein Hydrat oder ein anderes Solvat ist; oder ein beliebiges oder eine Kombination der Folgenden: Magnesiumtetrafluoroborat-Hexahydrat ([Mg(H2O)6](BF₄)2); Eisentetrafluoroborat-Hexahydrat; das Cobalttetrafluoroborat-Hexahydrat; und Zinktetrafluoroborat-Hexahydrat.

14. Wärmebatterie nach einem vorhergehenden Anspruch, wobei unterschiedliche Tetrafluoroboratsalze miteinander und/oder mit anderen Komponenten (z. B. Natriumchlorid) gemischt sind, um den Schmelzpunkt des Phasenwechselmaterials (PCM) zu senken.

15. Verwendung eines Fest-zu-Fest-Phasenwechselmaterials (PCM) nach einem vorhergehenden Anspruch in Transport-, Automobil- und barokalorischen Anwendungen.

## Revendications

1. Batterie thermique comprenant un matériau de stockage thermique sous la forme d'un matériau à changement de phase (PCM), ledit PCM comprenant :
au moins un ou une pluralité de sels de tétrafluoroborate qui présentent une transition solide à solide (polymorphe) ;
ledit PCM possédant un changement de phase solide à solide dans la zone de plage de températures d'environ -270°C à environ 3 000°C ;
ledit PCM comprenant des anions tétrafluoroborate (BF₄⁻) qui font partie d'un sel organique, d'un sel inorganique et/ou d'un sel métallique à condition que le PCM ne comprenne pas d'agent de nucléation ;
ledit PCM comprenant des anions tétrafluoroborate (BF₄⁻) possédant une densité apparente accrue et étant sous une forme pressée (c'est-à-dire compactée) ou coulée à l'état fondu ; et
ledit PCM étant capable d'être soumis à des cycles thermiques de manière répétée sans aucune dégradation significative du matériau PCM.

2. Batterie thermique selon la revendication 1, ledit au moins un ou ladite pluralité de sels de tétrafluoroborate étant capables d'au moins une, de deux ou plus, de trois ou plus ou d'une pluralité de transitions de phase solide à solide qui se produisent à différentes températures ; et éventuellement
ladite température du point de transition solide à solide peut être modifiée sous l'effet de la pression.

3. Batterie thermique selon une quelconque revendication précédente, lesdits sels de tétrafluoroborate étant ou comprennent du KBF₄ dans les quantités suivantes : 10 - 100 % en poids ; 20 - 100 % en poids ; 30 - 100 % en poids; 40 - 60 % en poids ; 50 - 100 % en poids ; 50 - 90 % en poids ; 60 - 90 % en poids ; 70 - 90 % en poids ; environ 100 % en poids ; ou
ledit sel de tétrafluoroborate comprenant un mélange de sels de tétrafluoroborate de KBF₄ et NH₄BF₄ dans un rapport de : environ 10 à 90 % en moles de KBF₄ et 10 - 90 % en moles de NH₄BF₄ ; environ 20 - 80 % en moles de KBF₄ et 20 - 80 % en moles de NH₄BF₄ ; environ 30 - 60 % en moles de KBF₄ et 30 - 60 % en moles de NH₄BF₄ ; environ 20 % en moles de KBF₄ et 80 % en moles de NH₄BF₄ ; environ 40 % en moles de KBF₄ et 60 % en moles de NH₄BF₄ ; environ 50 % en moles de KBF₄ et 50 % en moles de NH₄BF₄ ; environ 60 % en moles de KBF₄ et 40 % en moles de NH₄BF₄ ; ou environ 90 % en moles de KBF₄ et 10 % en moles de NH₄BF₄.

4. Batterie thermique selon une quelconque revendication précédente, lesdits matériaux à changement de phase (PCM) étant capable d'être soumis à des cycles thermiques de manière répétée jusqu'à : 50 cycles thermiques ; 70 cycles thermiques ; 100 cycles thermiques ; 200 cycles thermiques ; 500 cycles thermiques ; 1 000 cycles thermiques ; 5 000 cycles thermiques ; et 10 000 cycles thermiques.

5. Batterie thermique selon une quelconque revendication précédente, ledit matériau à changement de phase (PCM) étant sous une forme pressée (c'est-à-dire compactée) telle qu'une pastille pressée.

6. Batterie thermique selon une quelconque revendication précédente, ledit au moins un ou ladite pluralité de sels de tétrafluoroborate étant choisis parmi l'un quelconque ou une quelconque combinaison des sels de tétrafluoroborate suivants :
a. les sels de tétrafluoroborate de lithium (Li) ;
b. les sels de tétrafluoroborate de sodium (Na) ;
c. les sels de tétrafluoroborate de potassium (K) ;
d. les sels de tétrafluoroborate de rubidium (Rb) ;
e. les sels de tétrafluoroborate de césium (Cs) ;
f. les sels de tétrafluoroborate de magnésium (Mg) ;
g. les sels de tétrafluoroborate de calcium (Ca) ;
h. les sels de tétrafluoroborate de strontium (Sr) ;
i. les sels de tétrafluoroborate de baryum (Ba) ;
j. les sels de tétrafluoroborate de fer (Fe) ;
k. les sels de tétrafluoroborate de manganèse (Mn) ;
l. les sels de tétrafluoroborate de zinc (Zn) ;
m. les sels de tétrafluoroborate de zirconium (Zr) ;
n. les sels de tétrafluoroborate de titane (Ti) ;
o. les sels de tétrafluoroborate de cobalt (Co) ;
p. les sels de tétrafluoroborate d'aluminium (Al) ;
q. les sels de tétrafluoroborate de cuivre (Cu) ;
r. les sels de tétrafluoroborate de nickel (Ni).

7. Batterie thermique selon une quelconque revendication précédente, ledit PCM possédant un changement de phase solide à solide dans la zone de : environ -50°C à environ 1 500°C ; environ 0°C à environ 1 000°C ; ou environ 0°C à environ 500°C ; environ -50°C à environ 1 500°C ; environ -50°C à environ 500°C ; environ 0°C à environ 1 000°C ; environ 0°C à environ 500°C ; environ 0°C à environ 400°C ; environ 0°C à environ 300°C ; environ 0°C à environ 200°C ; environ 0°C à environ 100°C ; environ 100°C - 400°C ; environ 150°C - 300°C ; 200°C - 300°C ; environ 260°C - 290°C ; ou environ 270°C - 280°C.

8. Batterie thermique selon une quelconque revendication précédente, ledit matériau à changement de phase (PCM) comprenant un matériau de transition solide à solide qui fournit un PCM actif sur une large plage de températures sur l'une quelconque des plages de températures suivantes de : environ 0°C - 50°C ; environ 20°C - 30°C ; environ 100°C - 200°C ; ou environ 135°C - 155°C.

9. Batterie thermique selon une quelconque revendication précédente, ledit matériau à changement de phase (PCM) étant stable à l'air et à l'humidité dans l'atmosphère et sera stable sous n'importe quelle forme formée souhaitée.

10. Batterie thermique selon une quelconque revendication précédente, lesdits matériaux à changement de phase (PCM) comprenant l'un quelconque ou une combinaison des sels suivants : LiBF₄, NaBF₄, KBF₄, RbBF₄, CsBF₄ et NH₄BF₄ ou
lesdits matériaux à changement de phase (PCM) comprenant un cation choisi parmi l'un quelconque ou une combinaison des suivants :
un cation métallique, tel que Li+, Na+, K+, Cs+, Rb+, Mg2+, Sr2+, Fe2+, Fe3+, Pt+, AI3+, Ag+,
un cation inorganique, tel que NH4+, NO2+, NH2-NH3+ (Hydrazinium) ; ou un cation organique, tel que le 1-éthyl-3-méthylimidazolium.

11. Batterie thermique selon une quelconque revendication précédente, ledit matériau à changement de phase (PCM) formant un milieu de stockage thermique qui comprend un nombre d'autres composants et/ou additifs qui agissent en tant que :
a. améliorateurs de conductivité thermique
b. stabilisation de forme
c. aides au traitement.

12. Batterie thermique selon une quelconque revendication précédente, ledit matériau à changement de phase (PCM) comprenant au moins l'un ou une combinaison de l'un quelconque de la liste non limitative suivante de sels de tétrafluoroborate inorganiques :
le tétrafluoroborate de potassium (KBF₄) ;
NaBF₄ ;
NH₄BF₄ ;
LiBF₄ ;
Sr(BF₄)₂ ;
Ca(BF₄)₂ ;
NH₄H(BF₄)₂ ;
(NH₄)₃H(BF₄)₄ ;
Ba(BF₄)₂ ;
Cr(BF₄)₂ ;
Pb(BF₄)₂ ;
Mg(BF₄)₂ ;
AgBF₄ ;
RbBF₄ ;
CsBF₄ ;
Zn(BF₄)₂ ;
Fe(BF₄)₂ ;
Fe(BF₄)₃ ;
Ni(BF₄)₂ ;
Ni(BF₄)₃ ;
Mn(BF₄)₂ ;
Co(BF₄)₂ ; et Zn(BF₄)₂.

13. Batterie thermique selon une quelconque revendication précédente, ledit sel de tétrafluoroborate étant un hydrate ou un autre solvate ; ou l'un quelconque ou une combinaison des éléments suivants : tétrafluoroborate de magnésium hexahydraté ([Mg(H2O)6](BF₄)2) ; tétrafluoroborate de fer hexahydraté ; tétrafluoroborate de cobalt hexahydraté ; et tétrafluoroborate de zinc hexahydraté.

14. Batterie thermique selon l'une quelconque des revendications précédentes, différents sels de tétrafluoroborate étant mélangés ensemble et/ou avec d'autres composants (par exemple du chlorure de sodium) pour abaisser le point de fusion du matériau à changement de phase (PCM).

15. Utilisation d'un matériau à changement de phase solide à solide (PCM) selon une quelconque revendication précédente dans des applications de transport, automobiles et barocaloriques.
